(19) Europäisches Patentamt
European Patent Office
Office européen des brevets

(11) **EP 4 140 098 B1**

(12) **EUROPEAN PATENT SPECIFICATION**

(45) Date of publication and mention
of the grant of the patent:
**18.12.2024 Bulletin 2024/51**

(21) Application number: **20723539.1**

(22) Date of filing: **24.04.2020**

(51) International Patent Classification (IPC):
*H04L 41/0654* (2022.01)   *H04L 41/14* (2022.01)
*H04L 41/147* (2022.01)   *H04L 41/16* (2022.01)
*H04L 41/149* (2022.01)   *H04L 41/5009* (2022.01)
*H04L 43/0817* (2022.01)   *H04L 41/142* (2022.01)

(52) Cooperative Patent Classification (CPC):
**H04L 41/0654; H04L 41/145; H04L 41/147;
H04L 41/149; H04L 41/16;** H04L 41/142;
H04L 41/5009; H04L 43/0817

(86) International application number:
**PCT/IB2020/053888**

(87) International publication number:
**WO 2021/214527 (28.10.2021 Gazette 2021/43)**

(54) **AUTOMATED REASONING FOR EVENT MANAGEMENT IN CLOUD PLATFORMS**

AUTOMATISIERTE ARGUMENTATION ZUR EREIGNISVERWALTUNG IN CLOUD-PLATTFORMEN

RAISONNEMENT AUTOMATISÉ POUR LA GESTION D'ÉVÉNEMENTS DANS DES PLATEFORMES EN NUAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.03.2023 Bulletin 2023/09**

(73) Proprietor: **Telefonaktiebolaget LM Ericsson
(publ)
164 83 Stockholm (SE)**

(72) Inventors:
• **SOUALHIA, Mbarka
Laval, Québec H7L 0E5 (CA)**
• **MOURADIAN, Carla
Montreal, Québec H4K 2A3 (CA)**
• **LI, Wubin
Kirkland, Québec H9J 3W9 (CA)**

(74) Representative: **Ericsson
Patent Development
Torshamnsgatan 21-23
164 80 Stockholm (SE)**

(56) References cited:
**WO-A1-2013/149870     US-B1- 7 894 361**

• **MBARKA SOUALHIA ET AL: "Infrastructure fault detection and prediction in edge cloud environments", PROCEEDINGS OF THE 4TH ACM/IEEE SYMPOSIUM ON EDGE COMPUTING, ARLINGTON, VA, USA, 9 November 2019 (2019-11-09), New York, NY, USA, pages 222 - 235, XP055763424, ISBN: 978-1-4503-6733-2, DOI: 10.1145/3318216.3363305**
• **SUN JUN ET AL: "PAT: Towards Flexible Verification under Fairness", 26 June 2009, BIG DATA ANALYTICS IN THE SOCIAL AND UBIQUITOUS CONTEXT : 5TH INTERNATIONAL WORKSHOP ON MODELING SOCIAL MEDIA, MSM 2014, 5TH INTERNATIONAL WORKSHOP ON MINING UBIQUITOUS AND SOCIAL ENVIRONMENTS, MUSE 2014 AND FIRST INTERNATIONAL WORKSHOP ON MACHINE LE, ISBN: 978-3-642-17318-9, XP047480870**

## Description

TECHNICAL FIELD

The present disclosure relates to automated event management in cloud platforms and to automated fault management.

BACKGROUND

Faults often occur in cloud networks and systems and contribute to a significant portion of cloud operational costs. For instance, an infrastructure fault (e.g. a central processing unit (CPU), memory or hard disk drive (HDD) fault) detected at one node of an edge cloud, if not properly handled, may propagate and may spread up towards the application level. It may also propagate across several cloud nodes in the same cluster of the edge cloud. Once spread, it can be hard to identify and trace the root cause of the fault, which can delay the identification of appropriate fault recovery and prevention procedures. Recent developments in fifth generation (5G) networks have involved various technologies related to the edge and distributed cloud computing; the challenge of fault management (e.g. recovery procedures, prevention procedures) in such networks is threefold.

First, due to the heterogeneous devices and cloud deployments, it is very difficult to select the appropriate procedure to recover or prevent such faults in all the network and system domains. When such faults are detected, it requires human feedback or input to identify appropriate action to solve or handle the identified faults. This approach requires a lot of manual configuration and prior knowledge about the metrics and actions having a direct impact on the faults in a specific device or cloud. In addition, manual troubleshooting cannot guarantee to cover all fault scenarios and to propose the appropriate recovery or prevention procedures given the complexity and the size of current networks and systems. Hence, troubleshooting expertise can only be mastered after years of experience, especially in large cloud systems.

Second, the selection of appropriate fault management procedures for each domain and scenario becomes a challenge to avoid fault propagation. For example, procedures used in a data center may be very different from those used in content delivery networks. In addition, several procedures can be used to recover a detected or predicted fault and these procedures may perform differently under different circumstances. Furthermore, cloud systems may change in unforeseen ways because the workload and the cloud infrastructure can change over time, which may lead to the occurrence of new faults that require new recovery procedures. Consequently, there is no explicit, global, troubleshooting methodology that can be automated and utilized in such network and system domains due to the dynamic and complex nature of cloud systems.

Third, the cloud infrastructure and the available resources may change frequently, especially in edge domains. This introduces a challenge for a selected recovery and prevention procedure as it needs to adapt to changes due to the dynamic and unpredictable cloud contexts. For example, a method used to recover a CPU fault may become unusable or inappropriate (e.g. it may take a longer time than expected or it cannot be applied on the processor) according to available resources from one domain to another.

US 7,894,361 B1 describes a system for managing network capacities. The system comprises a processor implementing a data collection module configured to collect a plurality of capacity utilization data. The processor also implements a capacity analysis module configured to produce an actual capacity utilization map using the plurality of capacity utilization data. The capacity analysis module is also configured to produce a projected capacity utilization map using a plurality of designed node and link capacities, and a plurality of capacity engineering constraints. The processor also implements a simulation module configured to simulate a network management action and to produce simulated capacity utilization maps. The processor also implements a network management action module configured to suggest network management actions based on the actual capacity utilization map and the projected capacity utilization map and to rank the one or more network management actions based on the one or more simulated capacity utilization maps.

WO 2013/149870 A1 describes a technique for managing actions implemented on a network element within a telecommunications network. A method includes generating a list of actions from an action catalogue, each of said actions being a candidate for implementation on the network element, ranking the list of actions in accordance with one or more ranking parameters indicative of the suitability or perceived of said actions, and providing at least a portion of the ranked list of actions to a management agent arranged to manage said network element to enable the management agent to select and implement one, none or some of the actions.

Soualhia et al, "Infrastructure fault detection and prediction in edge cloud environments", Proceedings of the 4th ACM/IEEE Symposium on Edge Computing, p. 222-235, proposes a framework to detect and predict several faults at infrastructure-level of edge clouds using supervised machine learning and statistical techniques. The proposed framework is composed of three main components responsible for: (1) data pre-processing, (2) fault detection, and (3) fault prediction.

Sun et al, "PAT: Towards flexible verification under fairness", in: Bouajjani & Maler (eds), "Computer Aided Verification", Lecture Notes in Computer Science, vol 5643, p. 709-714, describe PAT, a toolkit for flexible and efficient system analysis under fairness. A unified algorithm is proposed to model check systems with a variety of fairness effectively in two different settings. PAT complements existing model checkers in terms of fairness.

SUMMARY

There is therefore a need to design an automated method to determine the appropriate recovery or prevention procedures for detected or predicted faults in cloud systems.

There is provided a method for automatically managing an event in a cloud system. The method comprises determining a candidate action to be applied to the cloud system for managing the event. The method also comprises applying the candidate action to a model of the cloud system. The method also comprises, upon determining, when the model of the cloud system meets at least one performance indicator, that the candidate action is a proved action, applying the proved action to the cloud system. The event is predicted.

There is provided a system for automatically managing an event in a cloud system. The system comprises processing circuits and a memory, the memory containing instructions executable by the processing circuits. The system, upon executing the instructions, is operative to determine a candidate action to be applied to the cloud system for managing the event. The system is also operative to apply the candidate action to a model of the cloud system. The system is also operative to, upon determining, when the model of the cloud system meets at least one performance indicator, that the candidate action is a proved action, apply the proved action to the cloud system. The event is predicted.

There is also provided a non-transitory computer readable media having stored thereon instructions for managing an event in a cloud system. The instructions can comprise any of the steps described herein.

The methods, systems and computer readable medias provided herein present improvements to the way fault management in cloud platforms operate.

BRIEF DESCRIPTION OF THE DRAWINGS

Figure 1 a schematic representation of information related with an action.
Figure 2 is a schematic illustration of the architecture for event management in cloud platforms.
Figure 3 is a schematic illustration of the fault detector-predictor.
Figure 4 is a flowchart of a method for fault management in cloud platforms.
Figure 5 a schematic illustration of the architecture of the action selector.
Figure 6 is a schematic illustration of an example constraints satisfaction problem as represented by a graph.
Figure 7 is a flowchart of a method executed by the action selector.
Figure 8 a schematic illustration of the architecture of the cloud model analyzer.
Figure 9 is a flowchart of a method executed by the cloud model analyzer
Figure 10 a schematic illustration of the architecture of the action reasoner.
Figure 11 is a flowchart of a method executed by the action reasoner.
Figure 12 a schematic illustration of the prover.
Figure 13 a schematic illustration of example actions from an action pool.
Figure 14 a schematic illustration of an example of fault management in a cloud platform using selected actions.
Figure 15 is a flowchart of a method for automatically managing an event in a cloud system.
Figure 16 is a schematic illustration of a cloud or virtualization environment in which the different methods, systems and computer readable medias described herein can be deployed.

DETAILED DESCRIPTION

Various aspects, features and embodiments will now be described with reference to the drawings to fully convey the scope of the disclosure to those skilled in the art.

Sequences of actions or functions may be used within this disclosure. It should be recognized that some functions or actions, in some contexts, could be performed by specialized circuits, by program instructions being executed by one or more processors, or by a combination of both.

Further, computer readable carrier or carrier wave may contain an appropriate set of computer instructions that would cause a processor to carry out the techniques described herein.

The functions/actions described herein may occur out of the order noted in the sequence of actions or simultaneously. Furthermore, in some illustrations, some blocks, functions or actions may be optional and may or may not be executed.

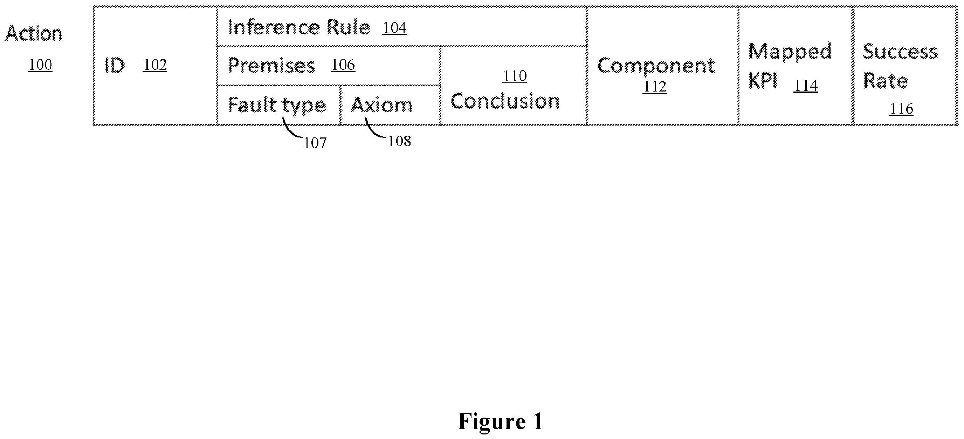

Referring to figure 1, which is a schematic representation of an action, the action 100 includes information about one or more task or function to be performed to repair a specific fault. Herein, the action is defined as a combination of the following information: an identifier (ID) 102, one or more inference rules 104, the target component 112 experiencing the fault, one or more key performance indicators (KPIs) 114 to be improved, and a success rate 116 the action achieves. A person skilled in the art would realize that the action could be defined differently, with more or less information and could still be used to achieve a similar purpose.

And inference rule 104 is a logical transformation or function that can be used to infer a conclusion, it comprises at least one premise 106 that is used to create an argument. It takes the premises, analyzes their syntax, and returns one or more conclusion 110. According to this proposed definition, an inference rule 104 can be composed of a set of premises 106 and a set of conclusions 110.

A premise 106 is a sequence of propositions that a given statement will justify and return a specific conclusion. Herein, a premise includes a fault type 107 and one or more axiom 108 or a set of axioms.

A fault type 107 refers to the nature of the experienced fault (memory, HDD, CPU, network, etc.).

An axiom 108 is a proposition or statement that serves as a premise leading to a specific conclusion or reasoning when its value is true.

A conclusion 110 is the logical consequence or deduction that is obtained given that some statements or propositions are true. Herein, it is the results of the combination of (1) the fault type 107 and (2) the axiom 108 values. This means that whenever the fault type 107 and axiom 108 are true, then the conclusion 110 is true.

A component 112 is an element of the monitored system in relation to which a fault may occur and to which an action 100 will be applied to repair a given fault.

A mapped KPI 114 is a type of performance measurement for an affected KPI associated with a specific fault.

A success rate 116 is a calculated percentage of successes among a number of attempts when applying a specific action with respect to a specific fault.

Different approaches exist concerning reasoning for fault management. These existing approaches can be grouped in four different classes: rule-based reasoning, case-based reasoning, model-based reasoning and machine learning or artificial intelligence (AI).

Rule-based reasoning combines a collection of rules, where each rule has the form of Boolean expression and action. When a Boolean expression is matched with a problem or fault, a corresponding action is executed. However, it this has several shortcomings: it requires exact matching, it fails if the fault is not anticipated by the rules, and it requires explicit updates for new faults.

Case-based reasoning can reason based on past problems and solutions. It is case-specific, and it is not easy to generalize to all cases. Case-based reasoning can incorporate the learning of new cases. A large case base improves the technique but can slow things down.

Model-based reasoning refers to developing a model of the physical world. Then, at run time, the model build from previous knowledge is combined with observed data to derive conclusions such as diagnosis or prediction. Key limitations of model-based reasoning include model validation, model re-use for another system, and the degree of model accuracy. In addition, model-based reasoning can handle problems explained by the model only.

Machine learning or AI based approaches require the compilation of libraries of healthy and fault patterns for the performance of a device. These libraries do not provide knowledge-rich structures or justifications for device behavior or failures.

Automatic and adaptive fault reasoning-management is a challenging task. It is difficult to design efficient and appropriate models to deal with fault management in any cloud platform or software system. Hence, it is of interest to design an automated solution to overcome the above-mentioned limitations.

Described herein is a method and system to automatically reason and select an appropriate action to be applied to recover from and/or prevent faults in cloud systems. The method comprises:

- identifying a candidate action to be applied on the cloud system for managing the event;
- applying the candidate action to a model of the cloud system; and
- upon determining that the model of the cloud system meets at least one performance indicator after applying the candidate action, applying the candidate action to the cloud system.

Some of the advantages of such a method/system, includes:

- automatic diagnosis for fault management for cloud systems, without requiring input from an expert human;
- fast and efficient analysis of proposed actions to be applied to cloud systems to recover and/or prevent the occurrence of faults;
- continuous learning about new faults while evaluating their corresponding actions (which means that as time goes on, less and less of the expensive fault reasoning method will be required);

- a very simple mechanism to extend the faults automated reasoning method to other applications, such as performance or security management; and
- complementary to other reasoning solutions (e.g. rules-based, case-based, model-based reasoning solutions).

Although the detailed description presented herein highlights an automated reasoning solution for fault management, the underlying method can be generalized to cover other applications, such as performance or security management.

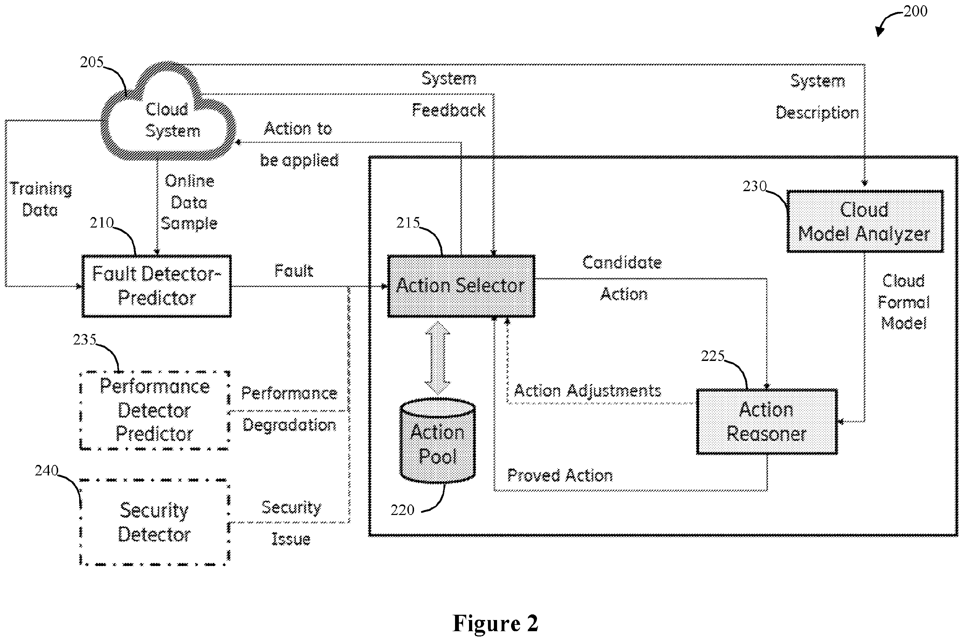

Figure 2 illustrates a system 200 which comprises three main components. The first component is an "Action Selector" 215 which identifies the main characteristics of a detected or predicted fault provided by a fault detector-Predictor 210 and which combines a set of inference rules to find a good candidate action (selected within an action pool 220) to be applied on the cloud system to recover from the fault or prevent its occurrence. The input of this component is mainly the detected or predicted fault and the output is mainly a candidate action to be applied on the cloud system.

The second component is a "Cloud Model Analyzer" 230, which takes as input a description of a given cloud system 205 and which provides as output a formal description of the cloud system. The main goal of the cloud model analyzer is to provide a high-level representation, or description of the architecture, of the cloud system as well as the different logical connections between its blocks using a formal language.

The third component is an "Action Reasoner" 225, which uses a candidate action output from the "Action Selector" component, applies it to the formal cloud model output from the "Cloud Model Analyzer" component and verifies its corresponding changes on the "formal cloud model". Next, the action reasoner checks whether the cloud model meets certain input specifications. When the specifications are met, the action reasoner approves the candidate action and notifies the "Action Selector" to apply it on the real cloud system. Next, the "Action Selector" gets feedback about the system's new state with respect to the detected fault and its recovery. The applied action and its feedback are stored in an "Action Pool" for future uses (e.g., future detected similar faults having the same characteristics). Otherwise, it automatically reasons and analyzes the system performance and/or traces to propose other appropriate candidate actions to be applied or to identify appropriate adjustments to the "candidate action". The identified adjustments are sent to the "Action Selector" to modify the proposed candidate action accordingly.

The Performance Detector-Predictor 235 and the Security Detector 240 are elements that could be switched with the Fault Detector-Predictor 210 to provide other functionalities to the cloud system, based on the same technique.

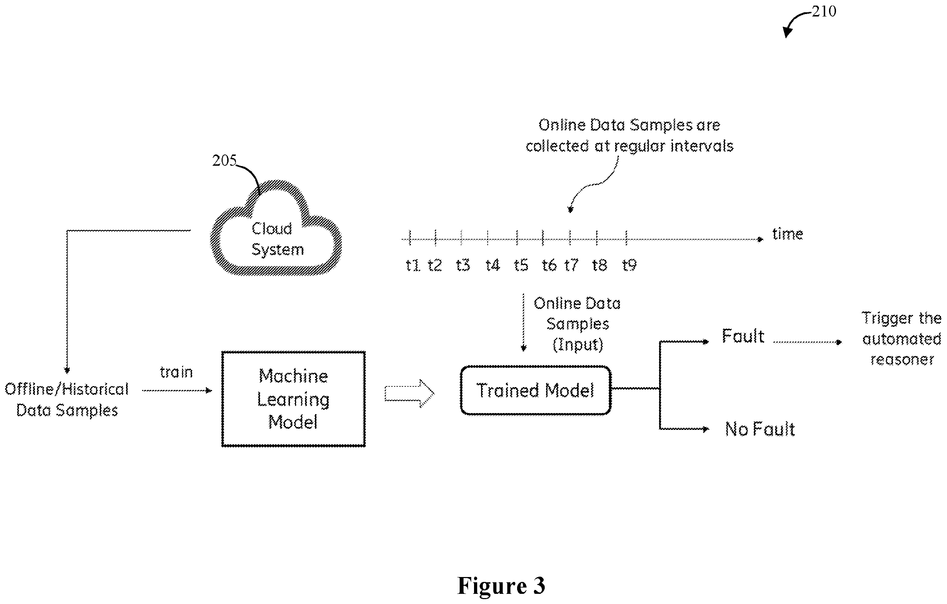

Figure 3 illustrates the Fault Detector-Predictor 210 of figure 2 in more details. The Fault Detector-Predictor 210 uses offline historical data samples to train a model using machine learning algorithms (i.e., Neural Network, Random Forest, Support Vector Machine, etc.). Once the model is trained, online data samples that are collected at different times (which may be at regular time intervals) can be fed to the model to determine or predict faults which will trigger the automated reasoner. The Performance Detector-Predictor 235 and the Security Detector 240 could be implemented using similar techniques.

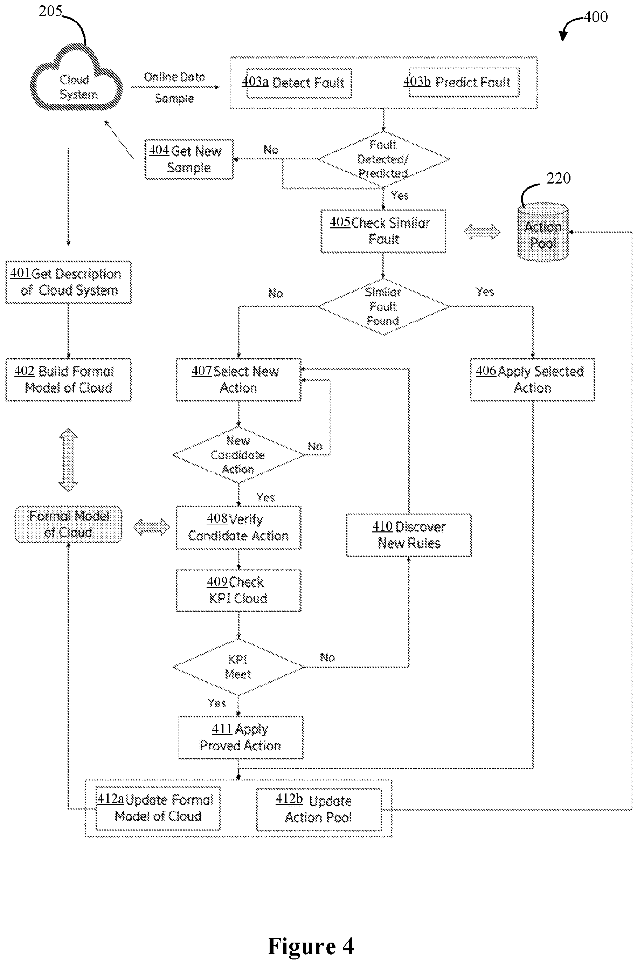

Figure 4 presents a detailed flowchart of the different steps involved in the proposed process 400. Given the cloud system description, step 401, the system builds and generates a formal model for the corresponding cloud system, step 402, that describes the logical connections between the blocks of the cloud system.

Given a new online data sample, the Fault Detector and Predictor is able to identify the occurrence of a fault, step 403a or 403b, when or before it happens. When no fault is detected or predicted, the Fault Detector and Predictor waits for the next online data sample, step 404. Then, the Fault Detector and Predictor waits until getting a new data sample from the monitored cloud system.

A data sample may include metrics concerning the status of CPU, storage, memory, Input/Output, temperature, node capacity, etc. at a given time, such as go _memstats_heap_inuse_bytes, node_load1, go_memstats_alloc_bytes, go_memstats_heap_alloc_bytes, node_vmstat_nr_unevictable, node_memory_Dirty, node_memory_Unevictable, node_vmstat_nr_mlock, node_memory_Mlocked, go_memstats_stack_inuse_bytes, etc.

In the presence of a fault, the Fault Detector and Predictor determines the main characteristics of the detected or predicted fault (e.g., comparing the metrics between the no-faulty state and the faulty state and getting the deviation from the normal cloud system state). The Fault Detector and Predictor checks, step 405, whether there exist similar faults stored in the "Action Pool" that were previously analyzed by the system (e.g. it checks metrics describing the fault and their deviations from the normal range, the metrics may be ordered according to their importance).

When similar faults are found, the Fault Detector and Predictor applies the selected action on the real cloud system, step 406, and updates the Action Pool and the cloud formal model accordingly, step 412b.

When no similar faults are found, the Fault Detector and Predictor selects a combination of the input inference rules that would compose the new candidate action given the characteristics of the identified fault, step 407.

The proposed candidate action is applied on the formal cloud model to verify its usefulness and efficiency, step 408.

The Fault Detector and Predictor checks, step 409, whether the proposed candidate action meets an input specification to determine its efficiency to recover or prevent the fault. The input specifications are the KPIs that reflect the characteristics of the system when it recovers or prevents a fault. Those KPIs can be monitored through variables to track change on the system.

When the KPI specification is met, the "Action Selector" applies the approved action on the real cloud system, step 411, and get a feedback about the new cloud system status after recovering the fault (e.g. fault recovered or not, metrics related to the corresponding fault). The received feedback is later used to store the applied action and its system feedback within an Action Pool, step 412b. The Action Pool is used to save the cost associated while looking for the appropriate action for future similar faults. The received feedback is used as well to update the formal cloud model to reflect the new changes accordingly, step 412a.

When the KPI specification is not met, the "Action Selector" analyzes the obtained results from the formal cloud model analyzer and identifies the possible reasons that lead to the failure of "candidate action". The "Action Selector" analyzes and reasons over the obtained "possible causes" and determines adjustments (e.g. new inferences rules) to the "Action Selector" to modify the candidate action, step 410. When no new rules/candidates are discovered, the system generates an alarm to notify the user to give his input or feedback with respect to the triggered scenario.

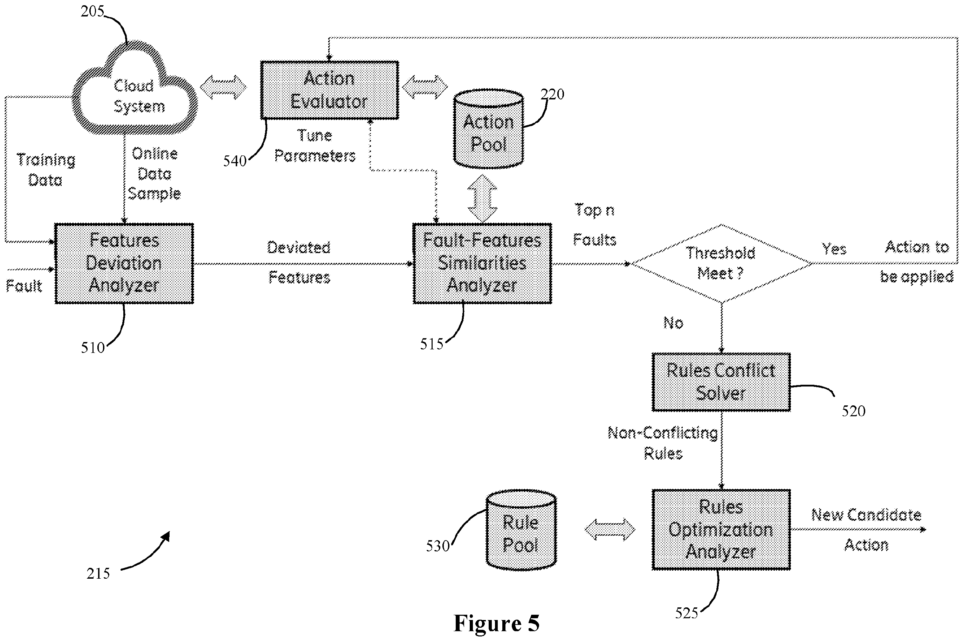

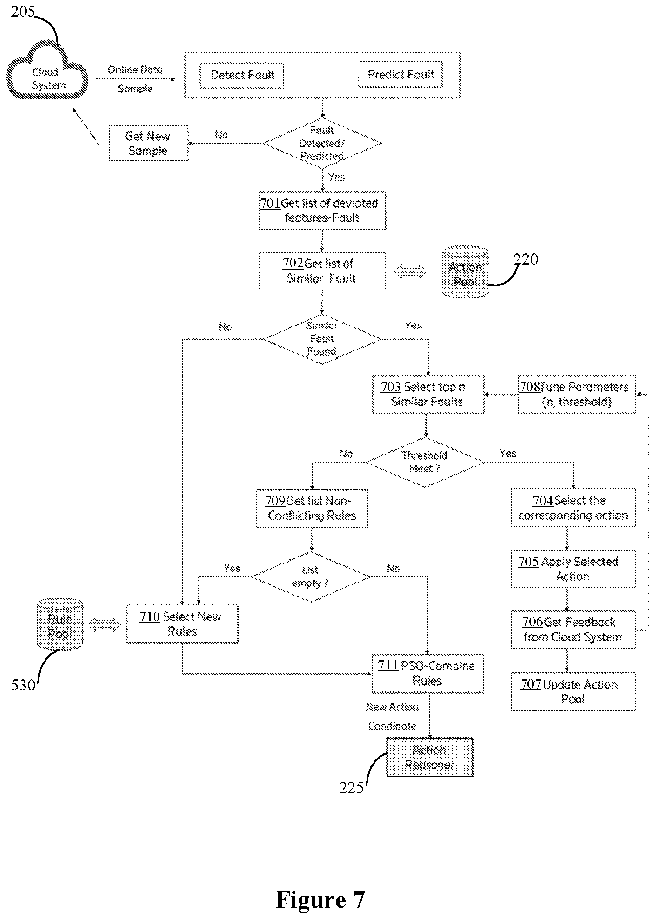

Figures 5 and 7 present the architecture and the flowchart of the "Action Selector", respectively.

Figure 5 illustrates the architecture of the Action Selector. Illustrated there is a "Features Deviation Analyzer" 510 that is responsible to identify a list of deviated features, step 701, in the presence of a detected-predicted fault, given an online data sample from the monitored system. Precisely, the Features Deviation Analyzer checks whether the online data sample (value) is within the range of the statistical properties (e.g. mean, standard deviation, etc.) of the training data used to train the detection and prediction model.

Given the list of the deviated features from the previous step, the "Fault-Features Similarities Analyzer" first checks whether there were similar faults previously discovered by the "Action Selector", step 702. The "Fault-Features Similarities Analyzer" 515 checks if there exists a previous fault with similar deviated features in the "Action Pool" 220. Next, it sorts the identifies similar faults by the amount of the deviation for each feature compared to the training data. Finally, the "Fault-Features Similarities Analyzer" select the most relevant "N" similar faults. "N" can be tuned with a random or specific variable based on the feedback from the monitored system.

Given the list of top "N" similar faults, step 703, the "Fault-Features Similarities Analyzer" compares the amount of the deviation with an input threshold (e.g., 70%, 80%, 90%) that is initialized by the user and tuned later when receiving system feedback. Particularly, the "Fault-Features Similarities Analyzer" selects the most similar faults, step 704, and ranks these faults based on their deviation similarities results and it chooses the one with the highest score. If the system shows the same deviation in the presence of faults, that means that the same action can be applied to get it back to the normal state. Therefore, the same action applied previously can be used on the most similar fault.

When the specified threshold is not met or no similar faults were found, the "Fault-Features Similarities Analyzer" will initiate the process of finding new candidate action, step 710, based on the characteristics of the detected-predicted fault.

A "Rules Conflict Solver" 520 analyzes the list of identified similar faults and their composing inferences rules. A combination of the rules can be found from the actions applied to similar faults to go back to the normal state. The goal of this solver is to go through the inference rules of the identified similar faults and get the list of the ones that are non-conflicting, step 709. The solver can be modeled as a constraint satisfaction problem (as described below) which can be solved using one of the known algorithms: backtracking, forward checking, maintaining arch consistency.

The Constraints Satisfaction Problem consists of assigning values to variables while satisfying certain constraints. Constraints Satisfaction Problem consists of three components:

Finite set of variables which are the conclusions in the inference rules of the selected actions.

$$r = \{r_1, r_2, r_3, r_4\}$$

Finite set of values for each variable

$$V = \{V_1, V_2\}$$

$V_1$ = 1 $\rightarrow$ a given rule to be selected
$V_2$ = 0$\rightarrow$ a given rule to not be selected

where each variable can take one of the values in *V*.

$$r_1 = \{0,1\}$$

$$r_2 = \{0,1\}$$

$$r_3 = \{0,1\}$$

$$r_4 = \{0,1\}$$

Finite set of constraints between the variables. There are two types of constraints: combination of conclusions in inference rules should reside in the same action, and combination of conclusions in inference rules should not reside in the same action.

$$C = \{r_1 \neq r_3, r_1 = r_2, r_2 \neq r_3, r_4 = r_1, r_3 \neq r_4, r_2 = r_4\}$$

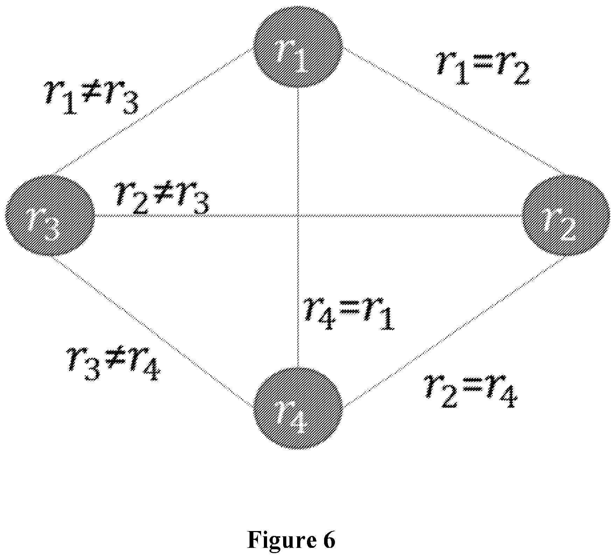

The Constraints Satisfaction Problem can be represented by a graph where nodes correspond to variables and edges correspond to constraints, as shown in figure 6. The problem is to assign a value for each variable such that the constraints are met. The problem can be solved by backtracking, forward checking, maintaining arch consistency.

When no conflicting rules or no similar faults are found, the solver select some rules from the "Rule Pool" 530 to compose one or more new candidate action(s), step 710.

A "Rules Optimization Analyzer" 525 uses the resulting non-conflicting rules from the previous step, or the rules selected by the solver (when no similar faults were found) to find a good (aiming towards optimal) combination of inference rules. The main objective of the analyzer is to determine a new candidate action to be applied on the cloud system to recover or prevent a fault. Particle Swarm Optimization (PSO) can be used to find a candidate action, step 711. PSO is selected because it can optimize a problem by iteratively trying to improve a candidate solution with regard to a given measure. The PSO tries to move the candidate solutions called particles around the search-space according to a mathematical formula as explained below.

Quantum Particle Swarm Optimization (QPSO) is a discrete version of PSO to solve problems with binary-valued solution elements.

Simulated Annealing (SA), Genetic Algorithm (GA), and Column-Generation (CG) are other examples of algorithms that could alternatively be used. PSO is chosen because of its effectiveness in solving a wide range of applications. It has the ability to find optimal or near-optimal solutions for large-space problems in a short time compared to other heuristics.

The QPSO steps are now described. First, the particles are initialized. A particle is defined based on the quantum bit. Two vectors are initialized.

A quantum particle vector $V(t)^i$, which is the velocity for particle $i$ and is initialized to random values between [0,1]:

$$V(t)^i = [v(t)_1^i, v(t)_2^i, \ldots, v(t)_n^i] \qquad (1)$$

and a discrete particle vector $p(t)^i$, which is initialized by initializing a random number for each $v(t)_j^i$.

Then, according to the condition in (3) and (4), the discrete particle vector $p(t)^i$ is initialized:

$$p(t)^i = [p(t)_1^i, p(t)_2^i, \ldots, p(t)_n^i] \qquad (2)$$

where n is the size of the problem, i.e., the total number of non-conflicting rules.

$$\text{If} \quad rand_j^i > v(t)_j^i \rightarrow p(t)_j^i = 1 \qquad (3)$$

$$\text{Otherwise} \qquad p(t)^i_j = 0 \qquad\qquad (4)$$

The initial population is evaluated by calculating the objective function for each particle, e.g., optimize the mapped KPI.

The particles that represent non-dominated solutions are stored in a repository *REP*. Each particle keeps track of its best local position, which is the best solution obtained by this particle so far ($P_{i_{localBest}}$).

At each iteration, the algorithm selects $P_{globalBest}$ that denotes the best position achieved so far by any particle in the population. There are several ways to select $P_{globalBest}$. One way is to rank the solutions in the repository and choose the one with the highest rank.

The velocity equation is updated according to equation (5) and the particle vector is updated in the same way as in equations (1) to (4)

$$V(t+1) = w \times V(t) + c_1 \times V_{localbest}(t) + c_2 \times V_{globalbest}(t) \qquad (5)$$

$$V_{localbest}(t) = \alpha \times p_{localbest}(t) + \beta \times \left(1 - p_{localbest}(t)\right) \qquad (6)$$

$$V_{globalbest}(t) = \alpha \times p_{globalbest}(t) + \beta \times \left(1 - p_{globalbest}(t)\right) \qquad (7)$$

where $\alpha + \beta = 1$, $\beta < 1$, $0 < \alpha$, $\alpha$ and $\beta$ are control parameters, w represents the degree of belief on oneself, $c_1$ is the local maximum, and $c_2$ is the global maximum.

$P_{i_{localbest}}$ is updated by applying Pareto dominance. If the current position is dominated by the one in the memory, the one in the memory is kept; otherwise, the one in the memory is replaced by the current position. Algorithm 1 shows how the algorithm can be implemented.

| Algorithm 1: Example of a known QPSO Algorithm | |
|---|---|
| 1 | **Initialization**: number of iterations, $j \leftarrow 0, V(t), P(t)$ |
| 2 | t=0 |
| 3 | value = Evaluate Population ($P(t)$) |
| 4 | store the position of particles that represents non-dominated vector in repository *REP* |
| 5 | initialize memory for each particle |
| 6 | $p_{i_{localBest}}[i] = P_i(t)$ |
| 7 | $j = j + 1$ |
| 8 | **while** $j <$ number of iterations |
| 9 | set $P_{globalBest}$ by selecting from the *REP* |
| 10 | **for** each particle $P(t)$ |
| 11 | update velocity and position of particles |
| 12 | value = Evaluate Population |
| 13 | update the $P_{localBest}$ |
| 14 | **if** the current $P(t)$ is non-dominated by $p_{i_{localBest}}[i]$ |
| 15 | $p_{i_{localBest}}[i] = P_i(t)$ |
| 16 | **end** |
| 17 | **end** |
| 18 | select the non-dominated particles |
| 19 | update the *REP* by comparing current non-dominated particles with the ones in *REP* |
| 20 | **end** |

An "Action Evaluator" 540 is responsible for applying the proposed action on the cloud system, step 705, with respect to the detected-predicted fault.

Next, the Action Evaluator gets the system feedback, step 706, on whether the applied action was able to properly handle the fault or not.

According to the result of the previous steps, the Action Evaluator also updates the parameters "N" and "the similarity threshold", step 708. For instance, one possible update could be to enlarge the search space for the most similar faults by increasing the value of "N". Another possible update could be to increase the similarity threshold to make sure that the system will recover from the fault when applying the same action.

Based on the received feedback, the Action Evaluator stores those information (e.g., fault, deviated features, applied action, system feedback) on the "Action Pool", step 707.

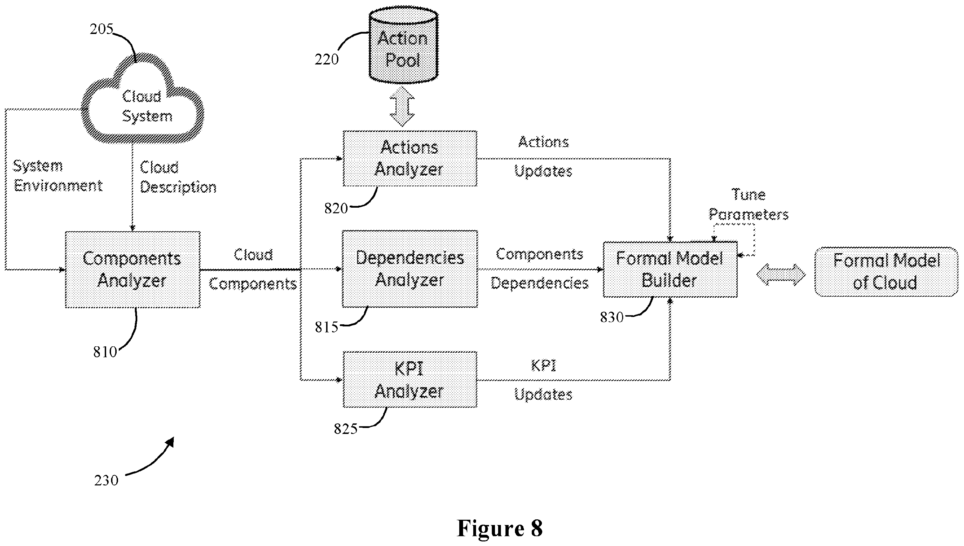

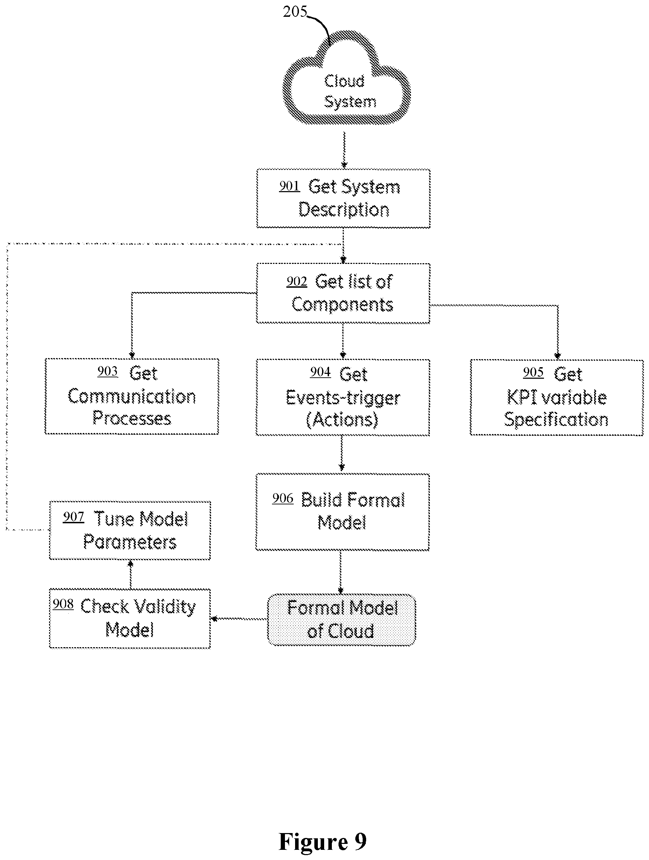

Figures 8 and 9 present the architecture and the flowchart of the "Cloud Model Analyzer" 230 in the system, respectively.

The goal of the "Cloud Model Analyzer" is the construction of a formal model for the cloud system and its properties. To this aim, the Communication Sequential Processes language is used to formally model the cloud system because it enables the modeling of synchronous and concurrent systems. Specifically, it enables to model the behavior and communication of multiple processes and parallel components for different distributed systems.

Linear Temporal Logic (LTL) is also used to provide a description of the properties that are verified. In the context of fault management, the properties to verify are the KPI of the monitored cloud system when applying a specific action to recover or prevent a fault.

Concretely, a model is constructed to formally describe the components of the cloud system including the dependencies between the components, updates of the system and the KPI updates when an action is applied.

A "Components Analyzer" 810 is responsible for getting the list of the different blocks composing the cloud system, steps 901 and 902, with respect to the input given from a user and a system description.

A "Dependencies Analyzer" 815 is responsible for representing a high-level description of the connections between the identified components, step 903.

An "Actions Analyzer" 820 is responsible for tracking the changes on the formal model of the cloud after applying an action, step 904.

A "KPI Analyzer" 825 is responsible for tracking the change on the KPI of the cloud system and the formal model accordingly, with respect to the changes on the applied actions, step 905.

A "Formal Model Builder" 830 is responsible to combine the output of the previous analyzer (actions, components, KPI, ...) to build a formal model of the cloud, step 906. Next, the Formal Model Builder checks the validity of the proposed model, step 908, and tunes its parameters accordingly, step 907.

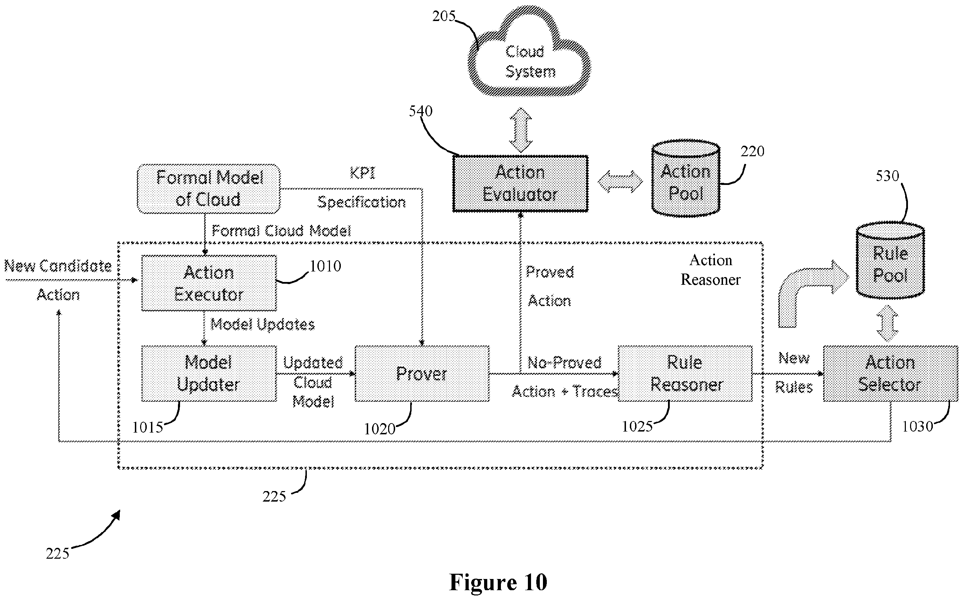

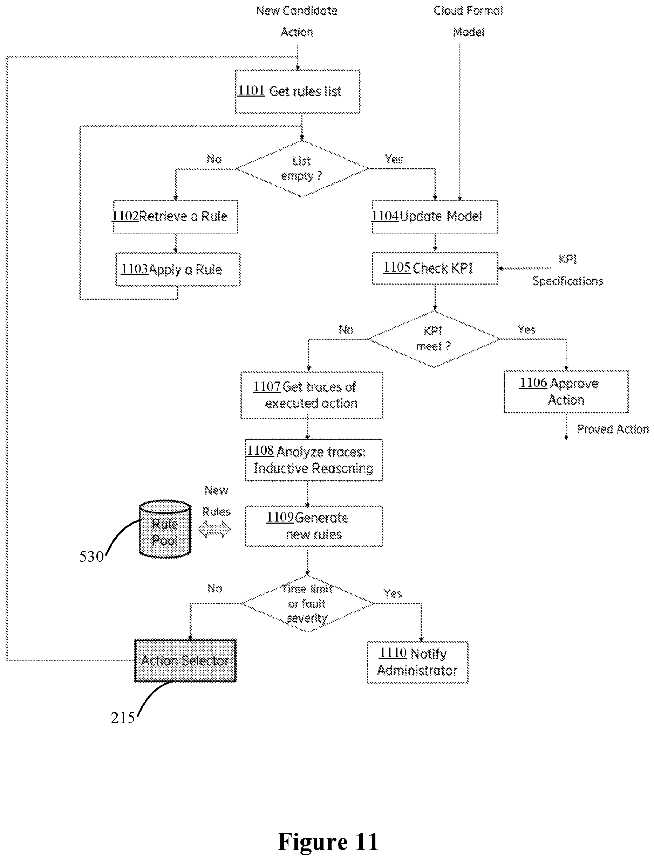

Figures 10 and 11 present the architecture and the flowchart of the "Action Reasoner" 225 in the system, respectively.

The input of the "Action Reasoner" 225 are: (1) a "Formal Cloud Model" and "KPI Specification" from the "Cloud Model Analyzer" and (2) a new "Candidate Action" from the "Action Selector". The output of the "Action Reasoner" are: (1) a "proved action" when the new candidate action meets the KPI specification otherwise it generates (2) "new rules" to be used to compose new candidate actions. The generated output will be sent to the "Action Selector" either to confirm applying a candidate action or to refine the received actions accordingly.

The "Action Executor" 1010 is responsible for analyzing the input "new candidate action" and to retrieve the rules list composing it, steps 1101, 1102. Following the order in the obtained list, it formally applies each rule, step 1103, on the formal cloud model. Given the abstract description of the dependencies and the updates described in each process in the Communication Sequential Processes model.

The "Model Updater" 1015 is responsible for tracking the changes on the abstract formal model when applying the rules composing the received candidate action following the flow of execution for those rules. The execution of the rules is reflected on the variables of the model that track the changes on the formal model (e.g., CPU utilization, size of queue, IO latency...), step 1104.

The "Prover" 1020 is responsible for checking whether the updated cloud model meets the input KPI specification when applying the new candidate action with respect to recovering-preventing the detected-predicted fault in the monitored system.

The prover that is used can be an existing prover available in the state of the art, including model checkers. For instance, the Process Analysis Toolkit (PAT) model checker can be used to verify the properties of the formal model to perform the formal quantitative analysis of the KPI in the cloud system. Other model checkers that could be used include NuSMV (http://nusmv.fbk.eu/), PRISM (https://www.prismmodelchecker.org/), UPPAAL (http://www.uppaal.org/), TAPAAL (http://www.tapaal.net/), SPIN (http://spinroot.com/spin/whatispin.html) or ROMEO (http://romeo.rts-software.org/).

The choice of PAT is motivated by the fact that PAT is based on Communication Sequential Processes and that it showed good results to simulate and verify concurrent, real-time systems, etc.

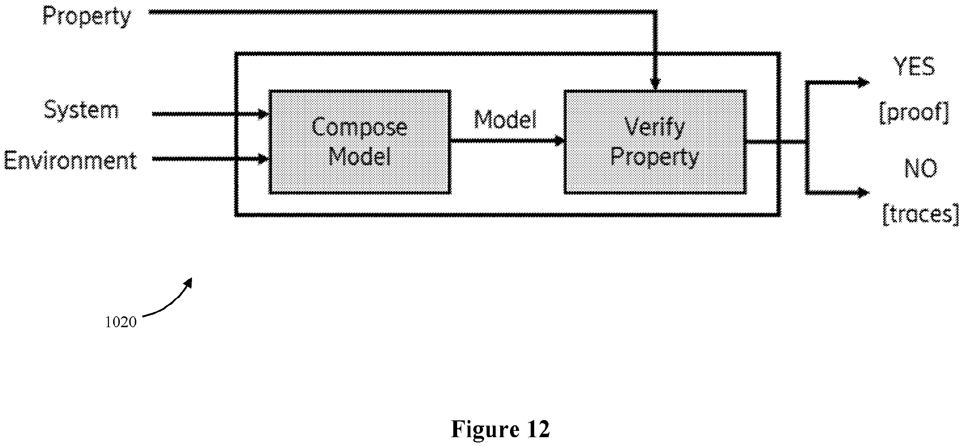

Figure 12 presents how the prover 1020 works, in general, when receiving a property to be verified. Based on a high-level/abstract description of a given system and its environment, the prover first composes/builds a "model" that mostly reflect the functionalities of the input system and its behavior. Given the composed model, the prover can then check whether a given property reflects the system status at a given time by comparing the given value on the input property and the status of elements composing the model. Finally, the prover can generate either a proof that the property is verified or traces as counterexamples to explain why the system did not meet the input property.

Returning to figures 10 and 11, the prover checks the input KPI specification, step 1105, according to the updated version of the formal model and the applied actions.

When the prover 1020 generates a "YES" and a proved action, the "Action Reasoner" 225 notifies the "Action Selector" 1030 to apply the proved candidate action, step 1106.

When the prover generates a "NO" and counterexamples traces, it sends the generated traces to the "Rules Reasoner" 1025 to analyze them, step 1107.

The "Rules Reasoner" 1025 is responsible for providing adjustments or refinements to the input candidate action that fails the verification step, meaning that the prover finds out that it is not the appropriate candidate action to overcome the fault, step 1108 and 1109.

Given the traces generated by the PAT model checker, the Rules Reasoner parses the traces and extracts data about possible relations between the actions-rules and the resulting KPI. To this aim, the states are checked where the formal cloud model does (not) meet a given KPI-property (e.g. target KPI could be that the CPU utilization rate becomes less than 70% to recover a CPU fault) and correlate these states to the obtained KPI performance.

As a result, the correlation between the cloud changes, the applied action, and the KPI rate can be investigated. Based on the obtained correlation results, the proposed "Rules Reasoner" can provide or suggest possible inference rules to overcome the detected or predicted fault using inductive reasoning.

Inductive learning enables a system to recognize patterns and regularities in previous knowledge or training data and to extract general rules from these patterns. The identified and extracted generalized rules can be used in reasoning and problem solving.

There exist several inductive algorithms in the literature including, for example, RULES (RULES: A Simple Rule Extraction System). RULES is a simple inductive learning algorithm for extracting IF-THEN rules from a set of training examples. Algorithms under RULES family are usually available in data mining tools, such as Knowledge Extraction based on Evolutionary Learning (KEEL) and Waikato Environment for Knowledge Analysis (WEKA), known for knowledge extraction and decision making.

For this step, inductive reasoning algorithms that generate generalizations from specific observations can be used. Precisely, it uses the generated data from a given system to make conclusions. New inference rules are built by going from the specific to the general meaning obtained from many observations to produce generalizations or a pattern according to an explanation or a theory. Here is an example of an inductive reasoning: every windstorm in this area comes from the north. I can see a big cloud of dust in the distance. A new windstorm is coming from the north.

Through the process of finding new inferences rules, step 1109, a timing condition is used as a stop criteria in order to notify the administrator, step 1110, when (1) the process is taking longer than expected or (2) the reasoner did not find new rules from the generated traces, or (3) the detected fault is critical like HDD fault that the system should find an appropriate action in a reasonable time because its severity of the read-write operations.

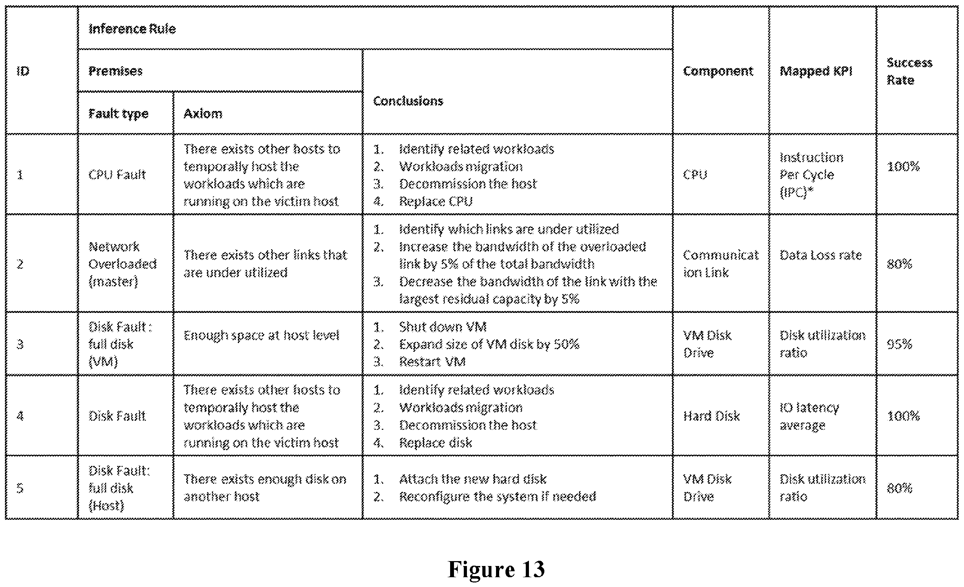

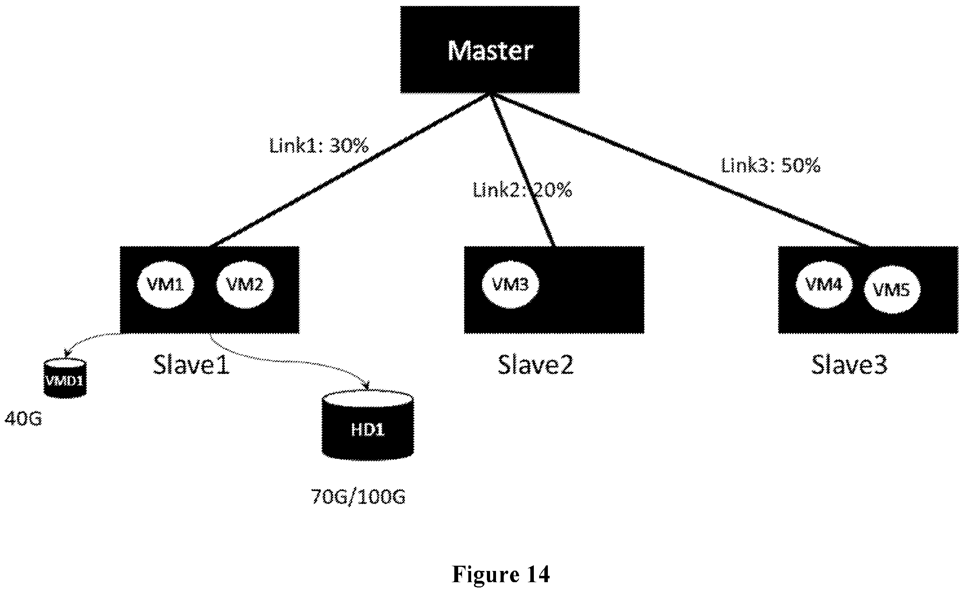

Some illustrative examples will now be described in relation with figures 13 and 14, to demonstrate the functionalities of the system.

For instance, the system can be deployed in different cloud infrastructure environments. This is because it does not depend on the type of the cloud where it is deployed but, it is more related to the type of the experienced events or faults and the system feedback with respect to the applied corrective actions. Moreover, a self-learning solution was proposed that adapts according to the changes captured from the monitored cloud system. Therefore, as an example, Ericsson Network Functions Virtualization Infrastructure (NFVI) is selected as a potential product where the system can be deployed and tested.

NFVI is a cloud platform where telecom, operations support system (OSS), business support system (BSS), media, etc. applications are running. Those applications are sensitive and dependent on the quality of the infrastructure on which they are deployed. A fault can negatively impact the quality of service delivered to the users (i.e., media applications) as well as the performance of operations (i.e., OSS and BSS applications). The solution presented herein can be used to avoid those issues and can help in making better decisions and improving the business value for the NFVI. For example, for the OSS and BSS, the system can select the appropriate action to balance, scale up or down the running load when there is a CPU fault to improve the performance of the operations systems. As a result, it can improve the business value associated with those operations or it may align the operations with given business inputs and targets specified by the user.

Table 1, figure 13, presents some examples of actions that may be stored in the "Action Pool" in the proposed framework. Different infrastructure faults are chosen including CPU, HDD, Network at both host and virtual machine (VM) levels in a cloud environment.

In the following, 2 examples of faults that are (1) network overloaded, and (2) disk fault, are provided.

Figure 14 shows an example of a cloud environment to better illustrate the selected examples.

In example 1, the network is overloaded. Let's assume that the link bandwidths between the master node and 3 slave nodes are allocated as follows: 30% for 'Slave 1', 20% for 'Slave 2', and 50% for 'Slave 3'. At some point, the "Fault Detector-Predictor" detects a 'Network-Overloaded' fault on link 2. First, the "Action Selector" analyzes the deviation of the detected fault-data compared to the training data to find previous similar faults. In this example it is assumed that it will find a similar fault, will then check the Action Pool, and select Action #2 as the Candidate Action because it was applied on an identified similar fault. By the similarity examination, the "Action Reasoner" confirms that applying Action #2 is enough to resolve the detected fault. Accordingly, the bandwidth of Link #2 is increased to 25%, and the one for Link #3 is decreased by 5% (referring to Action #2 in Table 1).

In example 2, the hard disk (HD) is full. At some point in time, a fault 'Disk Fault: full disk (VM)' on VM1 is predicted by the "The fault Detector-Predictor". To proactively handle this fault, the "Action Selector" selects Action #3 as the Candidate Action, based on the similarity between the predicted fault and the fault to which Action#3 was previously applied. The "Action Selector" passes Action #3 to the "Action Reasoner" for further evaluation. However, given the fact that there is only 30G residual capacity in HD 1 on host Slave1, applying Action #3 may cause on 'Disk Fault: full disk (Host)' on host Slave1 (assuming that disk utilization on any host should be lower than 80%, predefined by the admin). The "Action Reasoner" produces a composite action that combines Action #5 and Action #3 as the Action Adjustments after applying the composite actions on the formal cloud model generated by and output from the "Cloud Model Analyzer". Specifically, the size of HD1 is to be expanded by applying Action #5 (new hard disk attached), then the size of VM Disk (VMD)1 is expanded by 50% (40Gto 60G) by applying Action #3. The composite action is then stored in the Action Pool as a new action.

The system presented herein can be implemented and deployed within any distributed or centralized infrastructure cloud system. In addition, it can be implemented in one module or it can be distributed in different modules that are connected.

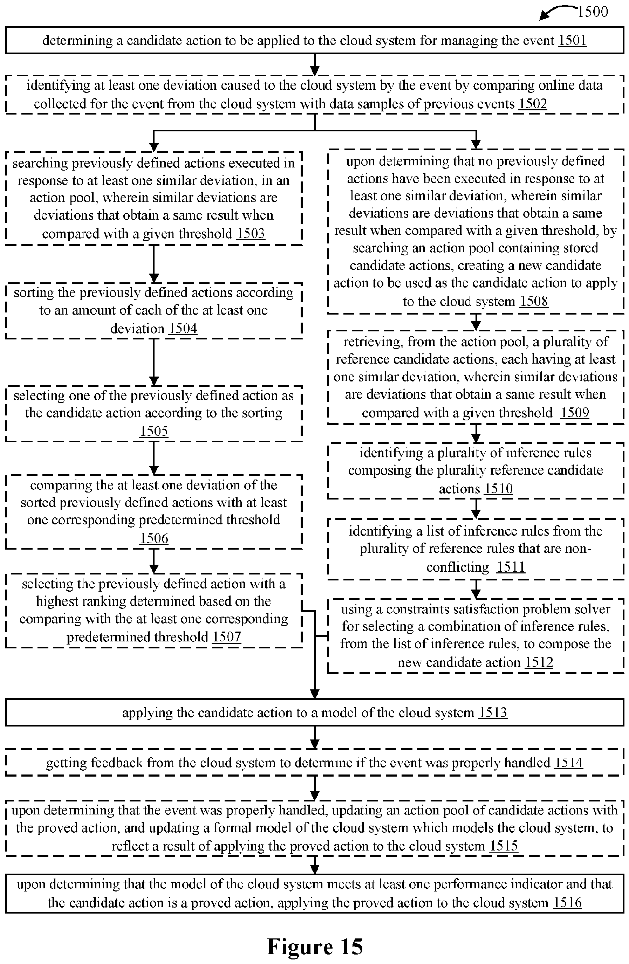

Figure 15 illustrates a method 1500 for automatically managing an event in a cloud system. The method comprises determining, step 1501, a candidate action to be applied to the cloud system for managing the event. The method also comprises applying, step 1513, the candidate action to a model of the cloud system. The method also comprises, upon determining that the model of the cloud system meets at least one performance indicator and that the candidate action is a proved action, applying, step 1516, the proved action to the cloud system.

The event is predicted. The event may be predicted by feeding online data collected from the cloud system to a model trained by machine learning using data samples of previous events and getting an output from the model predicting the event.

Determining the candidate action may comprise identifying, step 1502, at least one deviation caused to the cloud system by the event by comparing online data collected for the event from the cloud system with data samples of previous events. Determining the candidate action may comprise searching, step 1503, previously defined actions executed in response to at least one similar deviation, in an action pool, wherein similar deviations are deviations that obtain a same result when compared with a given threshold. Determining the candidate action may comprise sorting, step 1504, the previously defined actions according to an amount of each of the at least one deviation. Determining the candidate action may comprise selecting, step 1505, one of the previously defined action as the candidate action according to the sorting. The determining (or identification) of candidate actions can be done by comparing with thresholds such as 65%, 70%, or 80%, for example. In this example, deviations above 65%, 70%, or 80% would be deemed similar, respectively.

Selecting one of the previously defined action as the candidate action may further comprise comparing, step 1506, the at least one deviation of the sorted previously defined actions with at least one corresponding predetermined threshold and selecting, step 1507, the previously defined action with a highest ranking determined based on the comparing with the at least one corresponding predetermined threshold.

Determining the candidate action may comprise identifying, step 1502, at least one deviation caused to the cloud system by the event by comparing online data collected for the event from the cloud system with data samples of previous events. Determining the candidate action may comprise upon determining that no previously defined actions have been executed in response to at least one similar deviation, wherein similar deviations are deviations that obtain a same result when compared with a given threshold, by searching an action pool containing stored candidate actions, creating, step 1508, a new candidate action to be used as the candidate action to apply to the cloud system.

Creating a new candidate action may comprise retrieving, step 1509, from the action pool, a plurality of reference candidate actions, each having at least one similar deviation, wherein similar deviations are deviations that obtain a same result when compared with a given threshold. Creating a new candidate action may comprise identifying, step 1510, a plurality of inference rules composing the plurality reference candidate actions. Creating a new candidate action may comprise identifying, step 1511, a list of inference rules from the plurality of reference rules that are non-conflicting and using, step 1512, a constraints satisfaction problem solver for selecting a combination of inference rules, from the list of inference rules, to compose the new candidate action. The reference candidate actions can be selected e.g.

according to a ranking that is done based on the comparison with thresholds such as 65%, 70%, or 80%. In this example, deviations below 65%, 70%, or 80% would be deemed similar, respectively.

The model of the cloud system may be a formal model of the cloud system and applying the candidate action to the model of the cloud system may comprise applying the candidate action to the formal model of the cloud system, the formal model describing logical connections between blocks of the cloud system.

The at least one performance indicator may comprise key performance indicators (KPIs) that reflect characteristics of the cloud system when functioning in a normal state. The KPIs may be monitored through metrics that are used track deviations in the cloud system. The metrics may comprise at least one of central processing unit (CPU) load, storage usage, memory usage, Input/Output usage, temperature, node used capacity.

Applying the proved action to the cloud system may comprise getting feedback, step 1514, from the cloud system to determine if the event was properly handled.

The method may further comprise, upon determining that the event was properly handled, updating, step 1515 an action pool of candidate actions with the proved action and updating a formal model of the cloud system which models the cloud system, to reflect a result of applying, the proved action to the cloud system. The event may be a fault, a change in a performance indicator or a security alarm.

It should be understood that the term "event" as used in relation with figure 15 may refer to a fault related event, a performance change related event, or a security related event, although the previous figures only exemplified fault management.

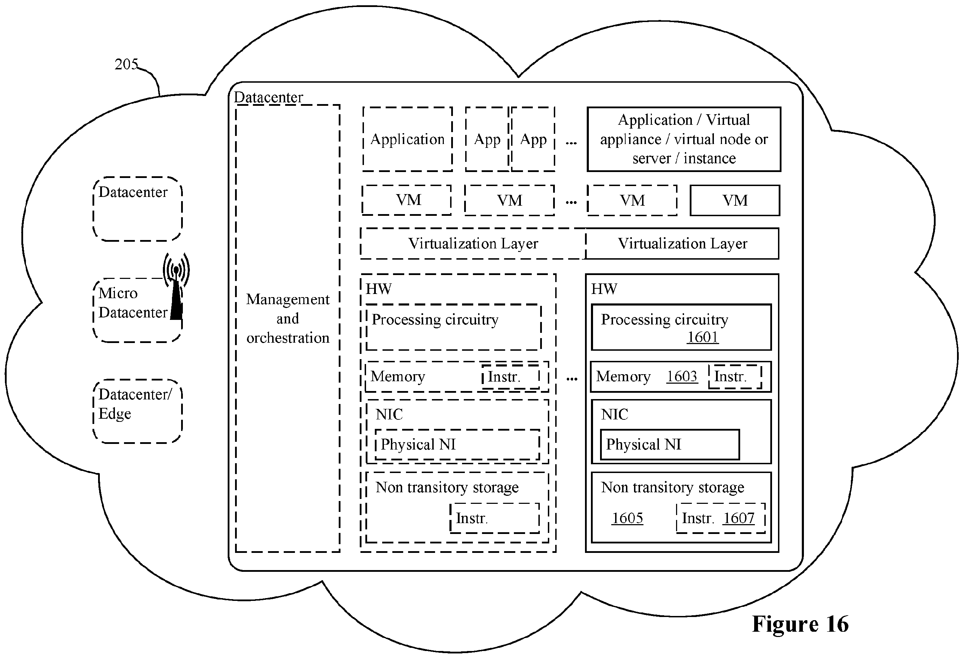

Referring to figure 16, there is provided a virtualization environment in which functions and steps described herein can be implemented.

A virtualization environment (which may go beyond what is illustrated in figure 16), may comprise systems, networks, servers, nodes, devices, etc., that are in communication with each other either through wire or wirelessly. Some or all of the functions and steps described herein may be implemented as one or more virtual components (e.g., via one or more applications, components, functions, virtual machines or containers, etc.) executing on one or more physical apparatus in one or more networks, systems, environment, etc.

A virtualization environment provides hardware comprising processing circuitry 1601 and memory 1603. The memory can contain instructions executable by the processing circuitry whereby functions and steps described herein may be executed to provide any of the relevant features and benefits disclosed herein.

Implementation of the techniques described herein can be made in a system such as the one illustrated in figure 16. The system for automatically managing an event in a cloud system comprises processing circuits 1601 and a memory 1603. The memory contains instructions executable by the processing circuits whereby the system is operative to determine a candidate action to be applied to the cloud system for managing the event. The system is also operative to apply the candidate action to a model of the cloud system. The system is also operative to, upon determining that the model of the cloud system meets at least one performance indicator and that the candidate action is a proved action, apply the proved action to the cloud system.

The event may be detected or predicted. The event may be predicted by feeding online data collected from the cloud system to a model trained by machine learning using data samples of previous events and getting an output from the model predicting the event.

The system may be further operative to identify at least one deviation caused to the cloud system by the event by comparing online data collected for the event from the cloud system with data samples of previous events. The system may be further operative to search previously defined actions executed in response to at least one similar deviation, in an action pool, wherein similar deviations are deviations that obtain a same result when compared with a given threshold. The system may be further operative to sort the previously defined actions according to an amount of each of the at least one deviation. The system may be further operative to select one of the previously defined action as the candidate action according to the sorting.

The system may be further operative to compare the at least one deviation of the sorted previously defined actions with at least one corresponding predetermined threshold and select the previously defined action with a highest ranking determined based on the comparing with the at least one corresponding predetermined threshold.

The system may be further operative to identify at least one deviation caused to the cloud system by the event by comparing online data collected for the event from the cloud system with data samples of previous events. The system may be further operative to, upon determining that no previously defined actions have been executed in response to at least one similar deviation, wherein similar deviations are deviations that obtain a same result when compared with a given threshold, by searching an action pool containing stored candidate actions, create a new candidate action to be used as the candidate action to apply to the cloud system.

The system may be further operative to retrieve, from the action pool, a plurality of reference candidate actions, each having at least one similar deviation, wherein similar deviations are deviations that obtain a same result when compared with a given threshold. The system may be further operative to identify a plurality of inference rules composing the plurality reference candidate actions. The system may be further operative to identify a list of inference rules from the plurality of reference rules that are non-conflicting. The system may be further operative to use a constraints satisfaction problem solver for selecting a combination of inference rules, from the list of inference rules, to compose the new candidate action.

The model of the cloud system may be a formal model of the cloud system and applying the candidate action to the model of the cloud system may comprise applying the candidate action to the formal model of the cloud system, the formal model describing logical connections between blocks of the cloud system.

The at least one performance indicator may comprise key performance indicators (KPIs) that reflect characteristics of the cloud system when functioning in a normal state. The KPIs may be monitored through metrics that are used track deviations in the cloud system. The metrics may comprise at least one of central processing unit (CPU) load, storage usage, memory usage, Input/Output usage, temperature, node used capacity.

Applying the proved action to the cloud system may comprise getting feedback from the cloud system to determine if the event was properly handled.

The system may be further operative to update an action pool of candidate actions with the proved action and update a formal model of the cloud system which models the cloud system, to reflect a result of applying the proved action to the cloud system.

The event may be a fault, a change in a performance indicator or a security alarm.

The hardware may also include non-transitory, persistent, machine readable storage media 1605 having stored therein software and/or instruction 1607 executable by processing circuitry to execute functions and steps described herein.

Modifications will come to mind to one skilled in the art having the benefit of the teachings presented in the foregoing description and the associated drawings. Therefore, it is to be understood that such modifications, such as specific forms other than those described above, are intended to be included within the scope as given by the appended claims, and all variations that fall within the range of the claims are intended to be embraced therein. Although specific terms may be employed herein, they are used in a generic and descriptive sense only and not for purposes of limitation.

**Claims**

1. A method for automatically managing an event in a cloud system, comprising:

   - determining (407) a candidate action to be applied to the cloud system for managing the event;
   - applying (408) the candidate action to a model of the cloud system; and
   - upon determining, when the model of the cloud system meets at least one performance indicator, that the candidate action is a proved action, applying (411) the proved action to the cloud system,

   wherein the event is predicted.

2. The method of claim 1, wherein the event is predicted by feeding online data collected from the cloud system to a model trained by machine learning using data samples of previous events and getting an output from the model predicting the event; or
   wherein the model of the cloud system is a formal model of the cloud system and wherein applying the candidate action to the model of the cloud system comprises applying the candidate action to the formal model of the cloud system, the formal model describing logical connections between blocks of the cloud system.

3. The method of claim 1, wherein determining the candidate action comprises:

   - identifying (701) at least one deviation caused to the cloud system by the event by comparing online data collected for the event from the cloud system with data samples of previous events;
   - searching (702) previously defined actions executed in response to at least one similar deviation, in an action pool, wherein similar deviations are deviations that obtain a same result when compared with a given threshold;
   - sorting the previously defined actions according to an amount of each of the at least one deviation; and
   - selecting one of the previously defined action as the candidate action according to the sorting;

   wherein, optionally, selecting one of the previously defined action as the candidate action further comprises:

   - comparing the at least one deviation of the sorted previously defined actions with at least one corresponding predetermined threshold; and
   - selecting (704) the previously defined action with a highest ranking determined based on the comparing with the at least one corresponding predetermined threshold.

4. The method of claim 1, wherein determining the candidate action comprises:

- identifying at least one deviation caused to the cloud system by the event by comparing online data collected for the event from the cloud system with data samples of previous events; and
- upon determining that no previously defined actions have been executed in response to at least one similar deviation, wherein similar deviations are deviations that obtain a same result when compared with a given threshold, by searching an action pool containing stored candidate actions, creating a new candidate action to be used as the candidate action to apply to the cloud system;

wherein, optionally, creating a new candidate action comprises:

- retrieving, from the action pool, a plurality of reference candidate actions, each having at least one similar deviation, wherein similar deviations are deviations that obtain a same result when compared with a given threshold;
- identifying a plurality of inference rules composing the plurality reference candidate actions;
- identifying a list of inference rules from the plurality of reference rules that are non-conflicting; and
- using a constraints satisfaction problem solver for selecting a combination of inference rules, from the list of inference rules, to compose the new candidate action.

5. The method of claim 1, wherein the at least one performance indicator comprises key performance indicators, KPIs, that reflect characteristics of the cloud system when functioning in a normal state;

wherein, optionally, the KPIs are monitored through metrics that are used track deviations in the cloud system; wherein, optionally, the metrics comprise at least one of central processing unit, CPU, load, storage usage, memory usage, Input/Output usage, temperature, node used capacity.

6. The method of claim 1, wherein applying the proved action to the cloud system comprises getting feedback from the cloud system to determine if the event was properly handled;
optionally further comprising upon determining that the event was properly handled, updating an action pool of candidate actions with the proved action, and updating a formal model of the cloud system which models the cloud system, to reflect a result of applying the proved action to the cloud system.

7. The method of any of the preceding claims, wherein the event is a fault, a change in a performance indicator, or a security alarm.

8. A system for automatically managing an event in a cloud system, comprising processing circuits (1601) and a memory (1603), the memory containing instructions executable by the processing circuits whereby the system is operative to:

- determine a candidate action to be applied to the cloud system for managing the event;
- apply the candidate action to a model of the cloud system; and
- upon determining, when the model of the cloud system meets at least one performance indicator, that the candidate action is a proved action, apply the proved action to the cloud system,

wherein the event is predicted.

9. The system of claim 8, wherein the event is predicted by feeding online data collected from the cloud system to a model trained by machine learning using data samples of previous events and getting an output from the model predicting the event; or
wherein the model of the cloud system is a formal model of the cloud system and wherein applying the candidate action to the model of the cloud system comprises applying the candidate action to the formal model of the cloud system, the formal model describing logical connections between blocks of the cloud system.

10. The system of claim 8, further operative to:

- identify at least one deviation caused to the cloud system by the event by comparing online data collected for the event from the cloud system with data samples of previous events;
- search previously defined actions executed in response to at least one similar deviation, in an action pool, wherein similar deviations are deviations that obtain a same result when compared with a given threshold;
- sort the previously defined actions according to an amount of each of the at least one deviation; and
- select one of the previously defined action as the candidate action according to the sorting;

wherein, optionally, the system is further operative to:

- compare the at least one deviation of the sorted previously defined actions with at least one corresponding predetermined threshold; and
- select the previously defined action with a highest ranking determined based on the comparing with the at least one corresponding predetermined threshold.

11. The system of claim 8, further operative to:

- identify at least one deviation caused to the cloud system by the event by comparing online data collected for the event from the cloud system with data samples of previous events; and
- upon determining that no previously defined actions have been executed in response to at least one similar deviation, wherein similar deviations are deviations that obtain a same result when compared with a given threshold, by searching an action pool containing stored candidate actions, create a new candidate action to be used as the candidate action to apply to the cloud system;

wherein, optionally, the system is further operative to:

- retrieve, from the action pool, a plurality of reference candidate actions, each having at least one similar deviation, wherein similar deviations are deviations that obtain a same result when compared with a given threshold;
- identify a plurality of inference rules composing the plurality reference candidate actions;
- identify a list of inference rules from the plurality of reference rules that are non-conflicting; and
- use a constraints satisfaction problem solver for selecting a combination of inference rules, from the list of inference rules, to compose the new candidate action.

12. The system of claim 8, wherein the at least one performance indicator comprises key performance indicators, KPIs, that reflect characteristics of the cloud system when functioning in a normal state;

wherein, optionally, the KPIs are monitored through metrics that are used track deviations in the cloud system; wherein, optionally, the metrics comprise at least one of central processing unit, CPU, load, storage usage, memory usage, Input/Output usage, temperature, node used capacity.

13. The system of claim 8, wherein applying the proved action to the cloud system comprises getting feedback from the cloud system to determine if the event was properly handled;
wherein, optionally, the system is further operative to update an action pool of candidate actions with the proved action and update a formal model of the cloud system which models the cloud system, to reflect a result of applying the proved action to the cloud system.

14. The system of any of claims 8-13, wherein the event is a fault, a change in a performance indicator, or a security alarm.

15. A non-transitory computer readable media having stored thereon instructions for managing an event in a cloud system, the instructions comprising any of the steps of claims 1 to 7.

**Patentansprüche**

1. Verfahren zur automatischen Verwaltung eines Ereignisses in einem Cloud-System, umfassend:

- Bestimmen (407) einer in Frage kommenden Aktion, die auf das Cloud-System angewendet werden soll, um das Ereignis zu verwalten;
- Anwenden (408) der in Frage kommenden Aktion auf ein Modell des Cloud-Systems; und

- bei Bestimmen, wenn das Modell des Cloud-Systems mindestens einen Leistungsindikator erfüllt, dass die in Frage kommende Aktion eine nachgewiesene Aktion ist, Anwenden (411) der nachgewiesenen Aktion auf das Cloud-System,

wobei das Ereignis vorhergesagt wird.

2. Verfahren nach Anspruch 1, wobei das Ereignis vorhergesagt wird durch Eingeben von aus dem Cloud-System erfassten Online-Daten in ein Modell, das durch maschinelles Lernen unter Verwendung von Datenproben früherer Ereignisse trainiert wurde, und Erhalten einer Ausgabe aus dem Modell, die das Ereignis vorhersagt; oder wobei das Modell des Cloud-Systems ein formales Modell des Cloud-Systems ist und wobei das Anwenden der in Frage kommenden Aktion auf das Modell des Cloud-Systems ein Anwenden der in Frage kommenden Aktion auf das formale Modell des Cloud-Systems umfasst, wobei das formelle Modell logische Verbindungen zwischen Blöcken des Cloud-Systems beschreibt.

3. Verfahren nach Anspruch 1, wobei das Bestimmen der in Frage kommenden Aktion umfasst:

- Identifizieren (701) mindestens einer Abweichung, die am Cloud-System durch das Ereignis verursacht wird, durch Vergleichen von aus dem Cloud-System für das Ereignis erfassten Online-Daten mit Datenproben früherer Ereignisse;
- Suchen (702) nach früher definierten Aktionen, die in Reaktion auf mindestens eine ähnliche Abweichung ausgeführt wurden, in einem Aktionspool, wobei ähnliche Abweichungen Abweichungen sind, die bei einem Vergleich mit einem gegebenen Schwellenwert dasselbe Ergebnis erzielen;
- Sortieren der früher definierten Aktionen gemäß einem Ausmaß jeder der mindestens einen Abweichung; und
- Auswählen einer der früher definierten Aktionen als die in Frage kommende Aktion gemäß dem Sortieren;

wobei optional das Auswählen einer der früher definierten Aktionen als die in Frage kommende Aktion ferner umfasst:

- Vergleichen der mindestens einen Abweichung der sortierten früher definierten Aktionen mit mindestens einem entsprechenden vorbestimmten Schwellenwert; und
- Auswählen (704) der früher definierten Aktion mit der höchsten Rangfolge, die basierend auf dem Vergleichen mit dem mindestens einen entsprechenden vorbestimmten Schwellenwert bestimmt wird.

4. Verfahren nach Anspruch 1, wobei das Bestimmen der in Frage kommenden Aktion umfasst:

- Identifizieren mindestens einer Abweichung, die am Cloud-System durch das Ereignis verursacht wird, durch Vergleichen von aus dem Cloud-System für das Ereignis erfassten Online-Daten mit Datenproben früherer Ereignisse; und
- bei Bestimmen, dass keine früher definierten Aktionen in Reaktion auf mindestens eine ähnliche Abweichung ausgeführt wurden, wobei ähnliche Abweichungen Abweichungen sind, die bei einem Vergleich mit einem gegebenen Schwellenwert dasselbe Ergebnis erzielen, durch Durchsuchen eines Aktionspools, der gespeicherte in Frage kommende Aktionen enthält, Erstellen einer neuen in Frage kommenden Aktion, die als die in Frage kommende Aktion zur Anwendung auf das Cloud-System verwendet werden soll;

wobei optional das Erstellen einer neuen in Frage kommenden Aktion umfasst:

- Abrufen einer Mehrzahl von in Frage kommenden Referenzaktionen aus dem Aktionspool, die jeweils mindestens eine ähnliche Abweichung aufweisen, wobei ähnliche Abweichungen Abweichungen sind, die bei einem Vergleich mit einem gegebenen Schwellenwert dasselbe Ergebnis erzielen;
- Identifizieren einer Mehrzahl von Inferenzregeln, die die Mehrzahl von in Frage kommenden Referenzaktionen bildet;
- Identifizieren einer Liste von Inferenzregeln aus der Mehrzahl von Referenzregeln, die konfliktfrei sind; und
- Verwenden eines Constraint-Satisfaction-Problemlösers zum Auswählen einer Kombination von Inferenzregeln aus der Liste der Inferenzregeln zum Bilden der neuen in Frage kommenden Aktion.

5. Verfahren nach Anspruch 1, wobei der mindestens eine Leistungsindikator Hauptleistungsindikatoren, KPIs, umfasst, die Charakteristiken des Cloud-Systems widerspiegeln, wenn es in einem normalen Zustand funktioniert;

wobei optional die KPIs durch Metriken überwacht werden, die zum Verfolgen von Abweichungen im Cloud-System verwendet werden;
wobei optional die Metriken mindestens eines von einer Last einer zentralen Verarbeitungseinheit, CPU, einer Datenspeichernutzung, einer Arbeitsspeichernutzung, einer Eingabe-/Ausgabenutzung, einer Temperatur und einer vom Knoten genutzten Kapazität umfassen.

6. Verfahren nach Anspruch 1, wobei das Anwenden der nachgewiesenen Aktion auf das Cloud-System ein Erhalten einer Rückmeldung vom Cloud-System umfasst, um zu bestimmen, ob das Ereignis ordnungsgemäß gehandhabt wurde;
optional ferner umfassend bei Bestimmen, dass das Ereignis ordnungsgemäß gehandhabt wurde, Aktualisieren eines Aktionspools von in Frage kommenden Aktionen mit der nachgewiesenen Aktion und Aktualisieren eines formalen Modells des Cloud-Systems, das das Cloud-System modelliert, um ein Ergebnis des Anwendens der nachgewiesenen Aktion auf das Cloud-System widerzuspiegeln.

7. Verfahren nach einem der vorhergehenden Ansprüche, wobei das Ereignis ein Fehler, eine Änderung eines Leistungsindikators oder ein Sicherheitsalarm ist.

8. System zum automatischen Verwalten eines Ereignisses in einem Cloudsystem, umfassend Verarbeitungsschaltungen (1601) und einen Speicher (1603), wobei der Speicher Anweisungen enthält, die von den Verarbeitungsschaltungen ausgeführt werden können, wodurch das System ausgelegt ist zum:

- Bestimmen einer in Frage kommenden Aktion, die auf das Cloud-System angewendet werden soll, um das Ereignis zu verwalten;
- Anwenden der in Frage kommenden Aktion auf ein Modell des Cloud-Systems; und
- bei Bestimmen, wenn das Modell des Cloud-Systems mindestens einen Leistungsindikator erfüllt, dass die in Frage kommende Aktion eine nachgewiesene Aktion ist, Anwenden der nachgewiesenen Aktion auf das Cloud-System,

wobei das Ereignis vorhergesagt wird.

9. System nach Anspruch 8, wobei das Ereignis vorhergesagt wird durch Eingeben von aus dem Cloud-System erfassten Online-Daten in ein Modell, das durch maschinelles Lernen unter Verwendung von Datenproben früherer Ereignisse trainiert wurde, und Erhalten einer Ausgabe aus dem Modell, die das Ereignis vorhersagt; oder
wobei das Modell des Cloud-Systems ein formales Modell des Cloud-Systems ist und wobei das Anwenden der in Frage kommenden Aktion auf das Modell des Cloud-Systems ein Anwenden der in Frage kommenden Aktion auf das formale Modell des Cloud-Systems umfasst, wobei das formelle Modell logische Verbindungen zwischen Blöcken des Cloud-Systems beschreibt.

10. System nach Anspruch 8, ferner ausgelegt zum:

- Identifizieren mindestens einer Abweichung, die am Cloud-System durch das Ereignis verursacht wird, durch Vergleichen von aus dem Cloud-System für das Ereignis erfassten Online-Daten mit Datenproben früherer Ereignisse;
- Suchen nach früher definierten Aktionen, die in Reaktion auf mindestens eine ähnliche Abweichung ausgeführt wurden, in einem Aktionspool, wobei ähnliche Abweichungen Abweichungen sind, die bei einem Vergleich mit einem gegebenen Schwellenwert dasselbe Ergebnis erzielen;
- Sortieren der früher definierten Aktionen gemäß einem Ausmaß jeder der mindestens einen Abweichung; und
- Auswählen einer der früher definierten Aktionen als die in Frage kommende Aktion gemäß dem Sortieren;

wobei optional das System ferner ausgelegt ist zum:

- Vergleichen der mindestens einen Abweichung der sortierten früher definierten Aktionen mit mindestens einem entsprechenden vorbestimmten Schwellenwert; und
- Auswählen der früher definierten Aktion mit der höchsten Rangfolge, die basierend auf dem Vergleichen mit dem mindestens einen entsprechenden vorbestimmten Schwellenwert bestimmt wird.

11. System nach Anspruch 8, ferner ausgelegt zum:

- Identifizieren mindestens einer Abweichung, die am Cloud-System durch das Ereignis verursacht wird, durch Vergleichen von aus dem Cloud-System für das Ereignis erfassten Online-Daten mit Datenproben früherer Ereignisse; und
- bei Bestimmen, dass keine früher definierten Aktionen in Reaktion auf mindestens eine ähnliche Abweichung ausgeführt wurden, wobei ähnliche Abweichungen Abweichungen sind, die bei einem Vergleich mit einem gegebenen Schwellenwert dasselbe Ergebnis erzielen, durch Durchsuchen eines Aktionspools, der gespeicherten in Frage kommenden Aktionen enthält, Erstellen einer neuen in Frage kommenden Aktion, die als die in Frage kommende Aktion zur Anwendung auf das Cloud-System verwendet werden soll;

wobei optional das System ferner ausgelegt ist zum:

- Abrufen einer Mehrzahl von in Frage kommenden Referenzaktionen aus dem Aktionspool, die jeweils mindestens eine ähnliche Abweichung aufweisen, wobei ähnliche Abweichungen Abweichungen sind, die bei einem Vergleich mit einem gegebenen Schwellenwert dasselbe Ergebnis erzielen;
- Identifizieren einer Mehrzahl von Inferenzregeln, die die Mehrzahl von in Frage kommenden Referenzaktionen bildet;
- Identifizieren einer Liste von Inferenzregeln aus der Mehrzahl von Referenzregeln, die konfliktfrei sind; und
- Verwenden eines Constraint-Satisfaction-Problemlösers zum Auswählen einer Kombination von Inferenzregeln aus der Liste der Inferenzregeln zum Bilden der neuen in Frage kommenden Aktion.

12. System nach Anspruch 8, wobei der mindestens eine Leistungsindikator Hauptleistungsindikatoren, KPIs, umfasst, die Charakteristiken des Cloud-Systems widerspiegeln, wenn es in einem normalen Zustand funktioniert;

wobei optional die KPIs durch Metriken überwacht werden, die zum Verfolgen von Abweichungen im Cloud-System verwendet werden;
wobei optional die Metriken mindestens eines von einer Last einer zentralen Verarbeitungseinheit, CPU, einer Datenspeichernutzung, einer Arbeitsspeichernutzung, einer Eingabe-/Ausgabenutzung, einer Temperatur und einer vom Knoten genutzten Kapazität umfassen.

13. System nach Anspruch 8, wobei das Anwenden der nachgewiesenen Aktion auf das Cloud-System ein Erhalten einer Rückmeldung vom Cloud-System umfasst, um zu bestimmen, ob das Ereignis ordnungsgemäß gehandhabt wurde;
wobei optional das System ferner zum Aktualisieren eines Aktionspools von in Frage kommenden Aktionen mit der nachgewiesenen Aktion und Aktualisieren eines formalen Modells des Cloud-Systems ausgelegt ist, das das Cloud-System modelliert, um ein Ergebnis des Anwendens der nachgewiesenen Aktion auf das Cloud-System widerzuspiegeln.

14. System nach einem der Ansprüche 8 bis 13, wobei das Ereignis ein Fehler, eine Änderung eines Leistungsindikators oder ein Sicherheitsalarm ist.

15. Nicht-transitorisches computerlesbares Medium mit darauf gespeicherten Anweisungen zur Verwaltung eines Ereignisses in einem Cloud-System, wobei die Anweisungen einen der Schritte nach einem der Ansprüche 1 bis 7 umfassen.

**Revendications**

1. Procédé de gestion automatique d'un événement dans un système en nuage, comprenant :

- la détermination (407) d'une action candidate à appliquer au système en nuage pour gérer l'événement ;
- l'application (408) de l'action candidate à un modèle du système en nuage ; et
- à la détermination, lorsque le modèle du système en nuage satisfait au moins un indicateur de performance, que l'action candidate est une action prouvée, l'application (411) de l'action prouvée au système en nuage,

dans lequel l'événement est prédit.

2. Procédé selon la revendication 1, dans lequel l'événement est prédit en fournissant des données en ligne collectées à partir du système en nuage à un modèle entraîné par apprentissage automatique à l'aide d'échantillons de données d'événements précédents et l'obtention d'une sortie du modèle prédisant l'événement ; ou

dans lequel le modèle du système en nuage est un modèle formel du système en nuage et dans lequel l'application de l'action candidate au modèle du système en nuage comprend l'application de l'action candidate au modèle formel du système en nuage, le modèle formel décrivant des connexions logiques entre des blocs du système en nuage.

3. Procédé selon la revendication 1, dans lequel la détermination de l'action candidate comprend :

- l'identification (701) d'au moins un écart causé au système en nuage par l'événement par la comparaison de données en ligne collectées pour l'événement à partir du système en nuage à des échantillons de données d'événements précédents ;
- la recherche (702) d'actions précédemment définies exécutées en réponse à au moins un écart similaire, dans un groupe d'actions, dans lequel des écarts similaires sont des écarts qui donnent un même résultat par comparaison à un seuil donné ;
- le tri des actions précédemment définies en fonction d'une quantité de chacun de l'au moins un écart ; et
- la sélection de l'une des actions précédemment définies en tant qu'action candidate en fonction du tri ;

dans lequel, facultativement, la sélection de l'une des actions précédemment définies en tant qu'action candidate comprend en outre :

- la comparaison de l'au moins un écart des actions précédemment définies triées à au moins un seuil prédéterminé correspondant ; et
- la sélection (704) de l'action précédemment définie avec un classement le plus élevé déterminé sur la base de la comparaison à l'au moins un seuil prédéterminé correspondant.

4. Procédé selon la revendication 1, dans lequel la détermination de l'action candidate comprend :

- l'identification d'au moins un écart causé au système en nuage par l'événement par la comparaison de données en ligne collectées pour l'événement à partir du système en nuage à des échantillons de données d'événements précédents ; et
- à la détermination qu'aucune action précédemment définie n'a été exécutée en réponse à au moins un écart similaire, dans lequel des écarts similaires sont des écarts qui donnent un même résultat par comparaison à un seuil donné, par la recherche dans un groupe d'actions contenant des actions candidate stockées, la création d'une nouvelle action candidate à utiliser en tant qu'action candidate à appliquer au système en nuage ;

dans lequel, facultativement, la création d'une nouvelle action candidate comprend :

- la récupération, à partir du groupe d'actions, d'une pluralité d'actions candidates de référence, présentant chacune au moins un écart similaire, dans lequel des écarts similaires sont des écarts qui donnent un même résultat par comparaison à un seuil donné ;
- l'identification d'une pluralité de règles d'inférence composant la pluralité d'actions candidates de référence ;
- l'identification d'une liste de règles d'inférence à partir de la pluralité de règles de référence qui ne sont pas en conflit ; et
- l'utilisation d'un résolveur de problème de satisfaction de contrainte pour sélectionner une combinaison de règles d'inférence, parmi la liste de règles d'inférence, pour composer la nouvelle action candidate.

5. Procédé selon la revendication 1, dans lequel l'au moins un indicateur de performance comprend des indicateurs clés de performance, KPI, qui reflètent des caractéristiques du système en nuage en fonctionnement dans un état normal ;

dans lequel, facultativement, les KPI sont surveillés par l'intermédiaire de métriques qui sont des écarts de pistes utilisées dans le système en nuage ;
dans lequel, facultativement, les métriques comprennent au moins l'une parmi une charge d'unité centrale, CPU, une consommation de stockage, une consommation de mémoire, une consommation d'entrées/sorties, une température, et une capacité utilisée de noeud.

6. Procédé selon la revendication 1, dans lequel l'application de l'action prouvée au système en nuage comprend l'obtention d'une rétroaction du système en nuage pour déterminer si l'événement a été correctement pris en charge ;
comprenant en outre facultativement, à la détermination que l'événement a été correctement pris en charge, la mise à jour d'un groupe d'actions des actions candidates avec l'action prouvée, et la mise à jour d'un modèle formel du système en nuage qui modélise le système en nuage, pour refléter un résultat de l'application de l'action prouvée au système en nuage.

7. Procédé selon l'une quelconque des revendications précédentes, dans lequel l'événement est un défaut, un changement d'un indicateur de performance, ou une alarme de sécurité.

8. Système de gestion automatique d'un événement dans un système en nuage, comprenant des circuits de traitement (1601) et une mémoire (1603), la mémoire contenant des instructions exécutables par les circuits de traitement de telle manière que le système soit fonctionnel pour :

   - déterminer une action candidate à appliquer au système en nuage pour gérer l'événement ;
   - appliquer l'action candidate à un modèle du système en nuage ; et
   - à la détermination, lorsque le modèle du système en nuage satisfait au moins un indicateur de performance, que l'action candidate est une action prouvée, appliquer l'action prouvée au système en nuage,

   dans lequel l'événement est prédit.

9. Système selon la revendication 8, dans lequel l'événement est prédit en fournissant des données en ligne collectées à partir du système en nuage à un modèle entraîné par apprentissage automatique à l'aide d'échantillons de données d'événements précédents et l'obtention d'une sortie du modèle prédisant l'événement ; ou
   dans lequel le modèle du système en nuage est un modèle formel du système en nuage et dans lequel l'application de l'action candidate au modèle du système en nuage comprend l'application de l'action candidate au modèle formel du système en nuage, le modèle formel décrivant des connexions logiques entre des blocs du système en nuage.

10. Système selon la revendication 8, en outre fonctionnel pour :

    - identifier au moins un écart causé au système en nuage par l'événement par la comparaison de données en ligne collectées pour l'événement à partir du système en nuage à des échantillons de données d'événements précédents ;
    - rechercher des actions précédemment définies exécutées en réponse à au moins un écart similaire, dans un groupe d'actions, dans lequel des écarts similaires sont des écarts qui donnent un même résultat par comparaison à un seuil donné ;
    - trier les actions précédemment définies en fonction d'une quantité de chacun de l'au moins un écart ; et
    - sélectionner l'une des actions précédemment définies en tant qu'action candidate en fonction du tri ;

    dans lequel, facultativement, le système est en outre fonctionnel pour :

    - comparer l'au moins un écart des actions précédemment définies triées à au moins un seuil prédéterminé correspondant ; et
    - sélectionner l'action précédemment définie avec un classement le plus élevé déterminé sur la base de la comparaison à l'au moins un seuil prédéterminé correspondant.

11. Système selon la revendication 8, en outre fonctionnel pour :

    - identifier au moins un écart causé au système en nuage par l'événement par la comparaison de données en ligne collectées pour l'événement à partir du système en nuage à des échantillons de données d'événements précédents ; et
    - à la détermination qu'aucune action précédemment définie n'a été exécutée en réponse à au moins un écart similaire, dans lequel des écarts similaires sont des écarts qui donnent un même résultat par comparaison à un seuil donné, par la recherche dans un groupe d'actions contenant des actions candidate stockées, créer une nouvelle action candidate à utiliser en tant qu'action candidate à appliquer au système en nuage ;

    dans lequel, facultativement, le système est en outre fonctionnel pour :

    - récupérer, à partir du groupe d'actions, une pluralité d'actions candidates de référence, présentant chacune au moins un écart similaire, dans lequel des écarts similaires sont des écarts qui donnent un même résultat par comparaison à un seuil donné ;
    - identifier une pluralité de règles d'inférence composant la pluralité d'actions candidates de référence ;

- identifier une liste de règles d'inférence à partir de la pluralité de règles de référence qui ne sont pas en conflit ; et
- utiliser un résolveur de problème de satisfaction de contrainte pour sélectionner une combinaison de règles d'inférence, parmi la liste de règles d'inférence, pour composer la nouvelle action candidate.

12. Système selon la revendication 8, dans lequel l'au moins un indicateur de performance comprend des indicateurs clés de performance, KPI, qui reflètent des caractéristiques du système en nuage en fonctionnement dans un état normal ;

dans lequel, facultativement, les KPI sont surveillés par l'intermédiaire de métriques qui sont des écarts de pistes utilisées dans le système en nuage ;
dans lequel, facultativement, les métriques comprennent au moins l'une parmi une charge d'unité centrale, CPU, une consommation de stockage, une consommation de mémoire, une consommation d'entrées/sorties, une température, et une capacité utilisée de noeud.

13. Système selon la revendication 8, dans lequel l'application de l'action prouvée au système en nuage comprend l'obtention d'une rétroaction du système en nuage pour déterminer si l'événement a été correctement pris en charge ; dans lequel, facultativement, le système est en outre fonctionnel pour mettre à jour un groupe d'actions des actions candidates avec l'action prouvée et mettre à jour un modèle formel du système en nuage qui modélise le système en nuage, pour refléter un résultat de l'application de l'action prouvée au système en nuage.

14. Système selon l'une quelconque des revendications 8 à 13, dans lequel l'événement est un défaut, un changement d'un indicateur de performance, ou une alarme de sécurité.

15. Supports non transitoires lisibles par ordinateur sur lesquels sont stockées des instructions pour gérer un événement dans un système en nuage, les instructions comprenant l'une quelconque des étapes selon les revendications 1 à 7.

Action 100

Inference Rule 104

ID 102

Premises 106

Fault type 107

Axiom 108

Conclusion 110

Component 112

Mapped KPI 114

Success Rate 116

**Figure 1**

**Figure 2**

Figure 3

**Figure 4**

**Figure 5**

EP 4 140 098 B1

Figure 6

**Figure 7**

**Figure 8**

**Figure 9**

Figure 10

New Candidate
Action

Cloud Formal
Model

<u>1101</u> Get rules list

No　　　　　List　　　　　Yes
　　　　　empty ?

<u>1102</u>Retrieve a Rule

<u>1104</u>Update Model

<u>1103</u>Apply a Rule

<u>1105</u> Check KPI ←...... KPI
Specifications

No　　　　　KPI　　　　　Yes
　　　　　meet ?

<u>1107</u> Get traces of
executed action

<u>1106</u> Approve
Action

Proved Action

<u>1108</u> Analyze traces:
Inductive Reasoning

New
Rules

Rule
Pool

530

<u>1109</u>Generate
new rules

No　　　Time limit　　　Yes
　　　or fault
　　　severity

Action Selector

215

<u>1110</u> Notify
Administrator

## Figure 11

Figure 12

EP 4 140 098 B1

| ID | Inference Rule | | | Component | Mapped KPI | Success Rate |
|----|----------------|---|---|-----------|------------|--------------|
| | Premises | | Conclusions | | | |
| | Fault type | Axiom | | | | |
| 1 | CPU Fault | There exists other hosts to temporally host the workloads which are running on the victim host | 1. Identify related workloads<br>2. Workloads migration<br>3. Decommission the host<br>4. Replace CPU | CPU | Instruction Per Cycle (IPC)* | 100% |
| 2 | Network Overloaded (master) | There exists other links that are under utilized | 1. Identify which links are under utilized<br>2. Increase the bandwidth of the overloaded link by 5% of the total bandwidth<br>3. Decrease the bandwidth of the link with the largest residual capacity by 5% | Communication Link | Data Loss rate | 80% |
| 3 | Disk Fault : full disk (VM) | Enough space at host level | 1. Shut down VM<br>2. Expand size of VM disk by 50%<br>3. Restart VM | VM Disk Drive | Disk utilization ratio | 95% |
| 4 | Disk Fault | There exists other hosts to temporally host the workloads which are running on the victim host | 1. Identify related workloads<br>2. Workloads migration<br>3. Decommission the host<br>4. Replace disk | Hard Disk | IO latency average | 100% |
| 5 | Disk Fault: full disk (Host) | There exists enough disk on another host | 1. Attach the new hard disk<br>2. Reconfigure the system if needed | VM Disk Drive | Disk utilization ratio | 80% |

**Figure 13**

**Figure 14**

EP 4 140 098 B1

~1500

determining a candidate action to be applied to the cloud system for managing the event 1501

identifying at least one deviation caused to the cloud system by the event by comparing online data collected for the event from the cloud system with data samples of previous events 1502

searching previously defined actions executed in response to at least one similar deviation, in an action pool, wherein similar deviations are deviations that obtain a same result when compared with a given threshold 1503

sorting the previously defined actions according to an amount of each of the at least one deviation 1504

selecting one of the previously defined action as the candidate action according to the sorting 1505

comparing the at least one deviation of the sorted previously defined actions with at least one corresponding predetermined threshold 1506

selecting the previously defined action with a highest ranking determined based on the comparing with the at least one corresponding predetermined threshold 1507

upon determining that no previously defined actions have been executed in response to at least one similar deviation, wherein similar deviations are deviations that obtain a same result when compared with a given threshold, by searching an action pool containing stored candidate actions, creating a new candidate action to be used as the candidate action to apply to the cloud system 1508

retrieving, from the action pool, a plurality of reference candidate actions, each having at least one similar deviation, wherein similar deviations are deviations that obtain a same result when compared with a given threshold 1509

identifying a plurality of inference rules composing the plurality reference candidate actions 1510

identifying a list of inference rules from the plurality of reference rules that are non-conflicting 1511

using a constraints satisfaction problem solver for selecting a combination of inference rules, from the list of inference rules, to compose the new candidate action 1512

applying the candidate action to a model of the cloud system 1513

getting feedback from the cloud system to determine if the event was properly handled 1514

upon determining that the event was properly handled, updating an action pool of candidate actions with the proved action, and updating a formal model of the cloud system which models the cloud system, to reflect a result of applying the proved action to the cloud system 1515

upon determining that the model of the cloud system meets at least one performance indicator and that the candidate action is a proved action, applying the proved action to the cloud system 1516

## Figure 15

**Figure 16**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7894361 B1

- WO 2013149870 A1

**Non-patent literature cited in the description**

- **SOUALHIA et al.** Infrastructure fault detection and prediction in edge cloud environments. *Proceedings of the 4th ACM/IEEE Symposium on Edge Computing,* 222-235

- PAT: Towards flexible verification under fairness. **SUN et al.** Lecture Notes in Computer Science. vol. 5643, 709-714